(19) Europäisches Patentamt / European Patent Office / Office européen des brevets

(11) **EP 1 867 474 A1**

(12) **EUROPEAN PATENT APPLICATION**
published in accordance with Art. 158(3) EPC

(43) Date of publication:
**19.12.2007 Bulletin 2007/51**

(51) Int Cl.:
*B32B 27/10* (2006.01)     *B32B 27/32* (2006.01)
*D21H 25/04* (2006.01)     *D21H 27/00* (2006.01)
*D21H 27/30* (2006.01)     *G03C 1/775* (2006.01)
*G03G 7/00* (2006.01)

(21) Application number: **06711776.2**

(22) Date of filing: **17.01.2006**

(86) International application number:
**PCT/JP2006/300496**

(87) International publication number:
**WO 2006/103816 (05.10.2006 Gazette 2006/40)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.03.2005 JP 2005095189**

(71) Applicant: **FUJIFILM CORPORATION**
**Minato-ku**
**Tokyo 106-8620 (JP)**

(72) Inventors:
• **HIRASHIMA, Yukio**
**c/o FujiFilm Corporation**
**Shizuoka, 4188666 (JP)**
• **TAMAGAWA, Shigehisa**
**c/o FujiFilm Corporation**
**Shizuoka, 4188666 (JP)**
• **MOCHIZUKI, Shigekatsu**
**c/o FujiFilm Corporation**
**Shizuoka, 4188666 (JP)**

(74) Representative: **HOFFMANN EITLE**
**Patent- und Rechtsanwälte**
**Arabellastrasse 4**
**81925 München (DE)**

(54) **SUPPORT FOR IMAGE RECORDING MATERIAL, PROCESS FOR PRODUCING THE SAME, AND IMAGE RECORDING MATERIAL**

(57)     The present invention provides an image-recording material support having high surface smoothness and excellent gloss, a method for producing the same and an image-recording material using the image-recording material support.

To this end, the present invention provides a image-recording material support which has a raw paper and a polymer coating layer on both surfaces of the raw paper, wherein the raw paper has a value of tensile energy absorption (TEA) in the CD direction/basis weight of 1,000mJ/g to 2,100mJ/g and is subjected to a soft calender treatment such that a surface of the raw paper on which an image is to be recorded makes contact with a roller having a surface temperature of 200°C to 350°C.

FIG. 1

**Description**

Technical Field

The present invention relates to an image-recording material support having high surface smoothness and excellent gloss, a method for producing the same, and an image-recording material.

Background Art

Conventionally, paper, synthetic paper, synthetic resin sheet, coat paper, laminate paper, and the like have been well known as supports for various image-recording materials such as electrophotographic materials, heat-sensitive color-developing materials, sublimation transfer image-receiving materials, heat-transfer image-receiving materials, silver halide photographic recording materials and inkjet-recording materials. Among the above-noted image recording material supports, coat paper and laminate paper are preferably used.

In order to record an image using a coat paper or a laminate paper and obtain an image print having high-image quality, a high-gloss and excellent surface smoothness, a surface of an image-recording material is required to have high-surface smoothness, and in accordance with the requirement, a surface of an image-recording material support is also required to have high-surface smoothness.

Methods of producing the coat paper and the laminate paper include a solvent coating method of applying to raw paper a thermoplastic resin which is solved in an organic solvent, an aqueous coating method of applying to raw paper a thermoplastic resin which is made into a latex or an aqueous solution (varnish), a dry laminate method of a thermoplastic resin, a melting extrusion coating method, cast coating method and the like.

However, the above-noted solvent coating method that uses a harmful organic solvent may cause harmful effect on the environment. In the above-noted aqueous coating method, water may swell the raw paper when a latex or an aqueous solution (varnish) is applied to the raw paper, thus losing surface smoothness (planarity) of the raw paper, which is so called a "return." Moreover, the aqueous coating method is not applicable to resins which are less likely to be made into latex or aqueous solution. The above-noted cast coating method has an advantage that a coated surface has less fine convexoconcaves or irregularities and has a high gloss, however, has shortcomings in that when the surface of a raw paper is coarse, the surface smoothness of the coated surface is degraded (irregularities occur) and sufficiently satisfactory properties cannot be obtained as an image-recording material support.

When a resin is applied over a surface of the raw paper to form a resin-coated layer, a number of concaves called as small pores sometimes reside on the resin-coated layer. The small pores are caused due to insufficient surface smoothness of a raw paper surface when the resin is applied over the raw paper surface, specifically, air is involved in between the resin-coated layer and a roller used for a surface treatment of the surface of the resin-coated layer and the air having nowhere else to go presses against the surface of the resin-coated layer, thereby causing such small pores. Because of presence of a number of the small pores, there has been a problem that the gloss of a support surface is degraded.

To increase the surface smoothness of the raw paper, techniques of subjecting the raw paper surface to a soft calender treatment by making a high-temperature metal roller contact with the raw paper surface have been proposed (see Patent Literature 1 to Patent Literature 7). The surface smoothness of the raw paper surface is improved and occurrence of the small pores can be prevented by employing the soft calender treatment at high temperature, however, at the same time, there is a problem that a contact with such a high-temperature metal roller takes moisture away from the raw paper to cause wrinkles and paper curl on the raw paper surface.

Thus, an image-recording material support and an image-recording material have not yet been provided so far, and further improvements and developments are desired.

Patent Literature 1 Japanese Patent Application Laid-Open (JP-A) No. 2-264939

Patent Literature 2 Japanese Patent Application Laid-Open (JP-A) No. 3-120539

Patent Literature 3 Japanese Patent Application Laid-Open (JP-A) No. 4-110939

Patent Literature 4 Japanese Patent Application Laid-Open (JP-A) No. 6-282037

Patent Literature 5 Japanese Patent Application Laid-Open (JP-A) No. 7-70973

Patent Literature 6 Japanese Patent Application Laid-Open (JP-A) No. 2003-248336

Patent Literature 7 Japanese Patent Application Laid-Open (JP-A) No. 2005-9053

Disclosure of Invention

The present invention aims to solve the conventional problems and achieve the following objects. Specifically, the object of the present invention is to provide an image-recording material support that can be suitably used for various image-recording materials, and to provide an image recording material which has the image-recording material support and allows for recording high-quality images and imparting excellent gloss and excellent surface smoothness.

The means for solving the above-noted problems are as follows.

< 1 > An image-recording material support having a raw paper, and a polymer coating layer on both surfaces of the raw paper, wherein the raw paper has a value of tensile energy absorption (TEA) in the CD direction/basis weight of 1,000mJ/g to 2,100mJ/g and is subjected to a soft calender treatment such that a surface of the raw paper on which an image is to be recorded makes contact with a roller having a surface temperature of 200°C to 350°C.

< 2 > The image-recording material support according to the item < 1 >, wherein the calender nip pressure is 50kN/m$^2$ to 300kN/m$^2$, and the calendering speed is 200m/min to 700m/min.

< 3 > The image-recording material support according to any one of the items < 1 > to < 2 >, wherein a change in moisture content of the raw paper before and after calender treatment is 0.8% or less.

< 4 > The image-recording material support according to any one of the items < 1 > to < 3 >, wherein the polymer coating layer contains a polyolefine resin.

< 5 > A method for producing an image-recording material support, including calendering a surface of a raw paper on which an image is to be recorded such that the surface of the raw paper makes contact with a roller having a surface temperature of 200°C to 350°C, and forming a polymer coating layer by melt laminating a polymer composition on both surfaces of the raw paper to thereby produce an image-recording material support according to any one of the items < 1 > to < 4 >.

< 6 > An image-recording material having an image-recording material support according to any one of the items < 1 > to < 4 >, and at least an image recording layer on the image-recording material support.

< 7 > The image-recording material according to the item < 6 >, being any one selected from electrophotographic image-receiving materials, heat-sensitive color-developing recording materials, sublimation transfer image-receiving materials, heat-transfer image-receiving materials, silver halide photographic recording materials and inkjet-recording materials.

The image-recording material support of the present invention has a raw paper and a polymer coating layer on both surfaces of the raw paper, wherein a value of tensile energy absorption (TEA) in the cross direction (CD) of the raw paper/basis weight is 1,000 mJ/g to 2,100 mJ/g and the raw paper is subjected to a soft calender treatment such that a surface of the raw paper on which an image is to be recorded makes contact with a roller having a surface temperature of 200°C to 350°C. Therefore, the image-recording material support makes it possible to prevent occurrence of wrinkles and paper curl of the raw paper and occurrence of small pores that could occur when forming the polymer coating layers and to satisfy both of high surface smoothness and excellent gloss, and can be suitably used for various image-recording materials.

The method for producing an image-recording material support of the present invention includes at least calendering a surface of a raw paper on which an image is to be recorded such that the surface of the raw paper makes contact with a roller having a surface temperature of 200°C to 350°C and forming a polymer coating layer by melt laminating a polymer composition on both surfaces of the raw paper. By employing the method, an image-recording material support having high-surface smoothness and excellent gloss can be efficiently produced.

The image-recording material of the present invention allows for obtaining an image print having high-image quality, high gloss and excellent surface smoothness by using the image-recording material support of the present invention.

The present invention can provide an image-recording material support which has high surface smoothness and excellent gloss and can be suitably used for various image-recording materials on which high-quality images can be recorded, and also provide an image-recording material which has the image-recording material support and allows for recording high-quality images and imparting high gloss and excellent surface smoothness.

Brief Description of Drawings

FIG. 1 is a schematic illustration showing one example of a shoe calender according to the present invention.
FIG. 2 is a schematic illustration showing one example of another shoe calender according to the present invention.
FIG. 3 is a schematic illustration showing the belt fixing system in the image forming apparatus used in Examples of the present invention.

Best Mode for Carrying Out the Invention

(Image-Recording Material Support)

The image-recording material support of the present invention has a raw paper and a polymer coating layer on both surfaces of the raw paper and further has other layers in accordance with necessity.

< Raw Paper >

The raw paper has a value of tensile energy absorption (TEA) in the cross direction (CD direction) /basis weight is 1,000 mJ/g to 2,100 mJ/g, and the raw paper is subjected to a calender treatment such that a surface of the raw paper on which an image is to be recorded makes contact with a roller having a surface temperature of 200°C to 350°C.
When the value of tensile energy absorption (TEA)/basis weight is less than 1,000 mJ/g, durability of the raw paper against a nip pressure applied at the time of a calender treatment is degraded and wrinkles may occur on the raw paper, and when greater than 2,100 mJ/g, the weight basis of the raw paper becomes nonuniform, which may cause paper curl.
Here, the cross direction (CD) is a direction perpendicular to the paper machine direction, and the tensile energy absorption (TEA: Tensile Energy Absorption) in the cross direction can be measured based on TAPPI T494.
The raw paper is not particularly limited and may be selected in accordance with the intended use. Specifically, the raw paper may be preferred to be a high-quality paper, like those described on page 223 to page 224 of "Fundamentals of Photography (shashin kougaku no kiso) - Silver Salt Photograph" - Society of Photographic Science and Technology of Japan published by Corona, 1979 (Showa 54).
The raw paper is not particularly limited as long as being a known material used for the image-recording material support and may be suitably selected from among various materials in accordance with the intended use. Examples of the raw paper include natural pulps such as needle-leaf tree pulp, broad-leaf tree pulp and the like, a mixture of the above natural pulp(s) with a synthetic pulp(s), and the like.
A pulp usable as a raw material of the raw paper is preferred to be the broad-leaf tree pulp, from the viewpoint of simultaneously improving planarity, dimension stability and the like of the paper, in a good balance and to a sufficient level. The needle-leaf tree pulp, synthetic pulp, mixed pulp thereof is, however, also usable.
Examples of the broad-leaf tree pulps include broad-leaf tree bleached kraft pulp (LBKP), and broad-leaf tree sulfite pulp (LBSP). Among these, the broad-leaf tree bleached kraft pulp (LBKP) is preferable.
The content of the broad-leaf tree pulp to the paper is not particularly limited, and can be suitably selected in accordance with the intended use. For example, the content is preferred to be 50% by mass or more, more preferably 60% by mass or more, and still more preferably 75% by mass or more.
Examples of the needle-leaf tree pulp include needle-leaf tree bleached kraft pulp (NBKP).
For the pulp, it is preferable to use a pulp having a long fiber length and a broad-leaf tree pulp having a short fiber length, primarily.
The TEA (tensile energy absorption) can be set to a desired value by selecting a fiber thickness of a pulp, and a fiber length before beating treatment and adjusting a variation of fiber length caused by beating treatment, the freeness and the water holding property of pulp.
The fiber thickness of the pulp is preferably 5 $\mu$m to 50 $\mu$m, and more preferably 10 $\mu$m to 30 $\mu$m. When the fiber thickness of the pulp is less than 5 $\mu$m, the paper strength may be degraded, and when more than 50 $\mu$m, the texture of paper may be degraded.
The fiber length of the pulp before beating treatment is preferably 0.50 mm to 0.75 mm, and more preferably 0.55 to 0.65 mm. When the fiber length is less than 0.50 mm, the paper strength may be degraded, and when more than 0.75 mm, the texture of paper may be degraded.
The variation of fiber length caused by the beating treatment is preferably 0.06 mm or less, and more preferably 0.04 mm or less. When the variation of fiber length caused by the beating treatment is more than 0.06 mm, paper curl is likely to occur.
The freeness of the pulp is preferably 200 mL to 380 mL, and the moisture retention value is preferably 110% to 190%.
A beater, a refiner or the like can be used for beating the pulp. When necessary, various types of additives can be added to a pulp slurry (hereinafter, may be referred to as "pulp paper material") which can be obtained after beating the pulp. Examples of the additives include filling materials, dry paper reinforcers, sizing agents, wet paper reinforcers, fixing agents, pH regulators and other agents.
Examples of the filling material include calcium carbonate, clay, kaolin, white clay, talc, titanium oxide, diatomaceous earth, barium sulfate, aluminum hydroxide and magnesium hydroxide.
Examples of the dry paper reinforcers include cationized starch, cationized polyacrylamide, anionized polyacrylamide, amphoteric polyacrylamide and carboxy-modified polyvinyl alcohol.

Examples of the sizing agents include a rosin derivative such as fatty acid salt, rosin, maleic rosin; paraffin wax, alkyl ketene dimer, alkenyl succinic anhydride (ASA), and a compound containing higher fatty acid such as epoxy aliphatic amide.

Examples of the wet paper reinforcers include polyamine polyamide epichlorohydrin, melamine resins, urea resins, and epoxy polyamide resins.

Examples of the fixing agents include polyvalent metallic salts such as aluminum sulfate and aluminum chloride and cationized polymers such as cationized starch.

Examples of the pH regulators include caustic soda and sodium carbonate.

Examples of other agents include defoaming agents, dyes, slime control agents, fluorescent whitening agents.

Furthermore, a softener may also be added when necessary. For the softener, for example, those disclosed on pp. 554-555 of "Paper and Paper Treatment Manual" (Shiyaku Time Co., Ltd.), 1980 and the like can be used.

Each of the above-noted additives may be used alone or in combination with two or more. The added amount of each of the additives into the pulp paper material is not particularly limited and may be suitably selected in accordance with the intended use, and typically, 0.1% by mass to 1.0% by mass is preferred.

The pulp paper material which is the pulp slurry to which the various types of additives are added as required is to be machined by using a paper-making machine such as a manual paper-making machine, a long-net paper-making machine, a round-net paper-making machine, a twin-wire machine, a combination machine, and thereafter is dried for preparing the raw paper. When necessary either before and after the drying, a surface sizing treatment may be carried out.

A surface sizing treatment liquid used for the surface sizing treatment is not particularly limited and may be suitably selected in accordance with the intended use. For example, a surface sizing treatment liquid may include at least any one of metal salts selected from alkaline metal salts and alkaline earth salts, a water-soluble high molecular compound, a fluorescent bleaching agent, a waterproof substance, a pigment and a dye.

For the at least any one of metal salts selected from alkaline metal salts and alkaline earth salts, those described above can be used.

The water-soluble high molecular compound is not particularly limited and may be suitably selected in accordance with the intended use. Examples thereof include polyvinyl alcohol, carboxy-modified polyvinyl alcohol, carboxymethyl cellulose, hydroxyethyl cellulose, cellulose sulfate, polyethylene oxide, gelatin, cationized starch, casein, sodium polyacrylate, styrene-maleic acid anhydride copolymer sodium salt and sodium polystyrene sulfonate. Of these, polyvinyl alcohol, carboxy-modified polyvinyl alcohol, carboxymethyl cellulose, hydroxyethyl cellulose, cellulose sulfate, polyethylene oxide and gelatin are preferable. Particularly, polyvinyl alcohol (PVA) is more preferable.

The content of the water-soluble high molecular compound is preferably $0.5 \text{g/m}^2$ to $2 \text{g/m}^2$.

Examples of the fluorescent bleaching agent include stilbene compounds, coumarin compounds, biphenyl compounds, benzo-oxazoline compounds, naphthalimide compounds, pyrazoline compounds, carbostyryl compounds, diaminostilbene disulfonic acid derivatives, imidazole derivatives, coumarin derivatives, triazole derivatives, carbazole derivatives, pyridine derivatives, naphthalic acid derivatives and imidazolone derivatives. Of these, stilbene-based compounds are preferable.

Note that the content of the fluorescent bleaching agent in the raw paper is not particularly limited and it is preferably 0.01% by mass to 0.5% by mass and more preferably 0.02% by mass to 0.2% by mass.

Examples of the waterproof substance include latex-emulsions such as styrene-butadiene copolymers, ethylene-vinyl acetate copolymers, polyethylenes and vinylidene chloride copolymers; and polyamide polyamine epichlorohydrin.

Examples of the pigment include calcium carbonate, clay, kaolin, talc, barium sulfate and titanium oxide.

As for the above-mentioned raw paper, to improve the rigidity and dimension stability of the image-recording material support, it is preferred that the ratio (Ea/Eb) of the longitudinal Young's modulus (Ea) to the lateral Young's modulus (Eb) is within a range from 1.5 to 2.0. When the ratio (Ea/Eb) is less than 1.5 or more than 2.0, the rigidity and dimension stability of the image-recording material support tend to be degraded and it may cause inconveniences to traveling property during conveyance.

It has been found that, in general, the "stiffness" of the paper differs based on differences in the way the paper is beaten, and the elasticity modulus of paper from paper-making after beating can be used as an important indicator of the "stiffness" of the paper. The elasticity modulus of the paper can be calculated from the following equation by using the relation of the density and the dynamic modulus which shows the physical properties of a viscoelastic object, and by measuring the velocity of sound propagation in the paper using an ultrasonic oscillator.

$$E = \rho c^2 (1 \text{-} n^2)$$

Where "E" represents dynamic modulus; "p" represents density; "c" represents the velocity of sound in paper; and "n" represents Poisson's ratio.

As n = 0.2 or so in a case of ordinary paper, there is not much difference in the calculation, even when the calculation is performed by using the following equation:

$$E = \rho c^2$$

Accordingly, when the density of the paper and acoustic velocity can be measured, the elasticity modulus can be easily calculated. In the above equation, when measuring acoustic velocity, various instruments known in the art may be used such as Sonic Tester SST-110 (Nomura Shoji Co., Ltd.) or the like.

The thickness of the raw paper is not particularly limited and may be suitably adjusted in accordance with the intended use, however, typically, it is preferably 30 $\mu$m to 500 $\mu$m, more preferably 50 $\mu$m to 300 $\mu$m, and still more preferably 100 $\mu$m to 250 $\mu$m. The basis weight of the raw paper is not particularly limited and may be suitably adjusted in accordance with the intended use. For example, it is preferably 50g/m$^2$ to 250g/m$^2$, and more preferably 100g/m$^2$ to 200g/m$^2$.

- Polymer Coating Layer -

The polymer coating layer is provided to both of the surface and the back surface of the raw paper.

For a polymer constituting the polymer coating layer, resins having film-forming ability are preferable, and polyolefine resins are preferably used. Preferred examples of the polyolefine resins include polyethylenes, polypropylenes, blended compounds of polypropylene and polyethylene, high-density polyethylenes and blended compounds of high-density polyethylene and low-density polyethylene.

A method of forming the polymer coating layer is not particularly limited and may be suitably selected in accordance with the intended use. Typically, the polymer coating layer can be formed by coating the image-recording material support with a coating solution by any one of a laminating method, a sequential laminating method or a laminating method using a single-layer or a multi-layer extrusion die such as a feet block extrusion die, a multi-manihold extrusion die, a multi-slot co-extrusion die, or a laminator. The shape of the single-layer extrusion die or multi-layer extrusion die is not particularly limited, however, in general, a T-die, a coat hanger die or the like are preferably exemplified.

The thickness of the polymer coating layer is preferably 10 $\mu$m to 60 $\mu$m. The thickness of the polymer coating layer to be formed on the surface (back surface) which is opposite from the surface on which an image is to be recorded is preferably 10 $\mu$m to 50 $\mu$m.

The thus obtained image-recording material support of the present invention has high-surface smoothness and excellent gloss and can be used in various applications, for example, can be preferably used for electrophotographic image-receiving materials, heat-sensitive color-developing recording materials, sublimation transfer image-receiving materials, silver halide photographic recording materials and inkjet recording materials.

(Method for Producing Image Recording Material Support)

The method for producing an image-recording material support of the present invention includes a calender treatment step and a polymer coating layer forming step and further includes other steps in accordance with necessity.

< Calender Treatment Step >

The calender treatment step is a step in which the raw paper is subjected to a calender treatment such that a surface of the raw paper on which an image is to be recorded makes contact with a roller having a surface temperature of 200°C to 350°C.

As for the surface temperature of the roller, it is preferable that the surface temperature of the raw paper surface with an image to be recorded thereon is 200°C to 350° and more preferably 230°C to 320°C. When the surface temperature of the roller in the calender treatment is less than 200°C, the gloss of the paper may be degraded due to degraded surface smoothness of the raw paper surface, and when the surface temperature of the roller is more than 350°C, occurrence of wrinkles and paper curl on the raw paper surface may not be prevented and the contactability with the polymer coating layer may be lowered due to the highly densified raw paper.

The calender nip pressure and the calendering speed employed in the calender treatment are not particularly limited and may be suitably adjusted in accordance with the intended use, however, it is preferable that the calender nip pressure is 50kN/m$^2$ to 300kN/m$^2$ and the calendering speed is 200 m/min to 700 m/min.

When the calender nip pressure is less than 50kN/m$^2$, the surface smoothness of the raw paper may be degraded, and when more than 300kN/m$^2$, the raw paper is highly densified and the contactability with the polymer coating layer may be degraded. Further, when the calendering speed is less than 200m/min, the variation in moisture of the raw paper before and after a calender treatment, which will be described hereinafter, is increased because the raw paper is overheated and overpressurized to cause wrinkles and paper curl in some cases. When the calendering speed is more than 700 m/min, the calender treatment effect may not be sufficiently exerted because the raw paper is insufficiently heated and pressurized.

In the raw paper, the change in moisture of the raw paper before and after a calender treatment is preferably 0.8% or less. When the change in moisture is more than 0.8%, it may cause wrinkles and paper curl because of a sharp decrease in moisture content of the raw paper.

The change in moisture of the raw paper can be determined based on the moisture content of the raw paper ad described below. Note that the moisture content of the raw paper was determined in accordance with JIS P-8127.

    (1) moisture content before calender treatment ......... A%
    (2) moisture content after calender treatment ..... B%
    (3) change in moisture before and after calender treatment

$$M = A - B \ (\%)$$

A calender used in the calender treatment is not particularly limited and may be suitably selected in accordance with the intended use. For example, a calender having a soft calender roller composed of a combination of a metal roller with a synthetic resin roller and a calender having a machine calender roller composed of a pair of metal rollers are exemplified. Of these, a calender having a soft calender roller is preferable. In particular, a long nip shoe calender composed of a metal roller and a shoe roller placed via a synthetic resin belt is preferable because it allows for taking a long nip width and the contact area between the raw paper and the roller is increased.

The shoe roller has an endless belt made of an elastic resin and further has other members in accordance with necessity. The endless belt called in the present invention includes an aspect of cylindrical sleeve, besides commonly used endless belts. The shoe roller is equipped with a pressurizing unit and a circulation system for circulating a lubricant, besides the endless belt (sleeve).

The endless belt made of an elastic resin can be formed, for example, by using a heavy fabric or the like as a support and covering the support with an elastic resin. Examples of the elastic resin include epoxy resins, polyamide resins, polyimide resins, polyimideamide resins, polyurethane resins, butadiene resins, polyester resins, nylon resins and polyether resins. Each of these resins may be used alone or in combination with two or more.

As for the hardness of the endless belt (sleeve), it is preferably 30 degrees to 80 degrees based on the Shore hardness and more preferably 40 degrees to 70 degrees. When the Shore hardness is less than 30 degrees, the shoe roller lifetime may be shortened because plasticity deformation occurs when using the endless belt. Further, a raw material having high surface smoothness and gloss may not be obtained. In contrast, when the Shore hardness is more than 80 degrees, it may difficult to ensure a curvature in a shape of shoe roller because of the excessively high hardness.

A metal roller corresponding to these shoe rollers are cylindrical or columnar rollers, and material or the like of the metal roller are not particularly limited and conventionally known metal rollers may be suitably selected for use, as long as a heating unit is provided in the inside thereof. The metal roller makes contact with a surface of a raw paper on which an image is to be recorded (the surface) among both surfaces of the raw paper that will be subjected to a calender treatment, and thus the smoother the surface roughness of the metal roller is, the more preferable it is. Specifically, the metal roller preferably has a surface roughness defined in JISB0601 of 0.3S or less and more preferably 0.2S or less.

When a water-soluble metal salt is contained as an additive in the raw paper, a metal roller making contact with the raw paper may become rusty because of the influence of the water-soluble metal salt. Therefore, a metal roller whose surface is chromeplated is commonly used.

However, the chromeplated metal roller is poor in high-temperature resistance and may have cracks on the surface thereof when used under the high-temperature conditions of 200°C to 350°C.

From the viewpoint of improving the high-temperature resistance, it is preferable that the surface of the metal roller is subjected to a surface treatment such as cermet thermal spraying and ceramic thermal spraying.

Preferred examples of the cermet thermal spraying include tungsten carbide-cobalt thermal spraying and tungsten-nickel thermal spraying.

Preferred examples of the ceramic thermal spraying include chrome oxide thermal spraying and zirconium thermal spraying.

Not only excellent rust resistance can be obtained by subjecting the metal roller surface to any of these surface treatments, but also excellent heat resistance can be obtained. Besides, the metal roller is excellent in crack resistance and the durability of the metal roller can be improved.

When a raw paper is calender-treated by using a shoe calender as described above, a nip width formed between the metal roller and the shoe roller is preferably 50 mm to 300 mm, more preferably 50 mm to 200 mm, and still more preferably 70 mm to 200 mm. When the nip width is less than 50 mm, it is unfavorable because the time length required for the raw paper to pass over the nip portion is shortened and the calender treatment effect is reduced. In the meanwhile, with the nip width is more than 300 mm, it is unfavorable because the linear pressure in calender treatment is lowered and the calender treatment effect is reduced.

Further, the passing speed of the raw paper at the time when the raw paper passes over the nip portion of the shoe calender is preferably, as described above, 200 m/min to 700 m/min, more preferably 150 m/min to 600 m/min and particularly preferably 200 m/min to 500 m/min. When the passing speed is lower than 200 m/min, it may cause wrinkles and paper curl due to a sharp decrease in moisture content of the raw paper and the productivity may be lowered. In contrast, when the passing speed of the raw paper is higher than 700 m/min, the calender treatment effect may not be exerted because the time length required for the raw paper to pass over the nip portion is shortened.

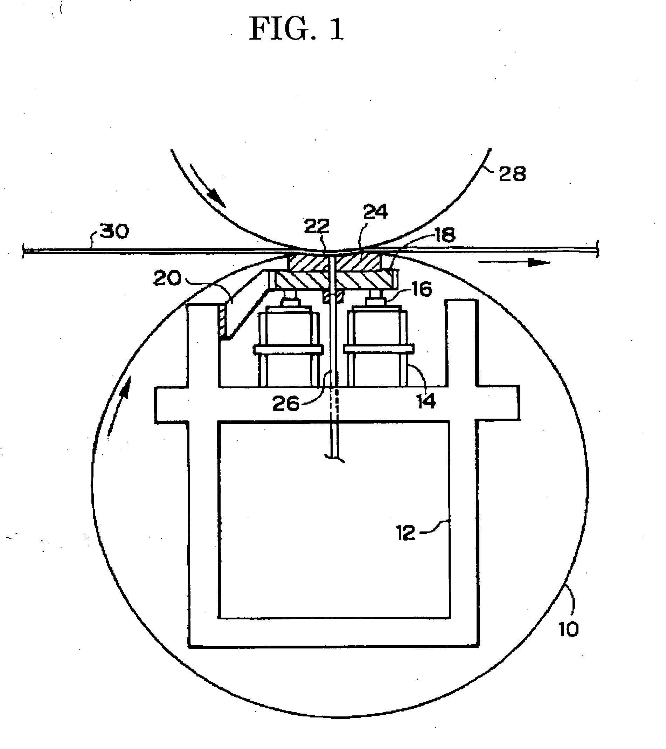

Here, one example of the shoe calender will be explained with reference to FIG. 1. In FIG. 1, the shoe calender has an endless belt 10 which is made of an elastic resin which is liquid-impermeable and has flexibility. In the endless belt 10, a support member 12 is placed, and to the support member 12, oil hydraulic presses 14 are arranged in a fixed manner as pressurizing units. A support plate 18 is firmly fixed to piston rods that are projected from the upper ends of the oil hydraulic presses 14 with screws, respectively.

The support plate 18 is provided with a support 20 having a surface which slides on a surface of the support member 12, a press shoe 24 having a concave portion 22 is fixed to the support plate 18 in a fixed manner and a lubricant supplying unit 26 for supplying a lubricant to the concave portion 22. In the figure, a reference numeral 28 denotes a metal roller.

In the shoe calender, the metal roller 28 is rotated in a direction as shown in FIG. 1 in a state where press flutes (not shown) are disposed on both surfaces of a web 30 (raw paper) successively obtained in a paper-machining process, and a lubricant is supplied from the lubricant supplying unit 26 to the concave portion 22 of the press shoe 24, and the press shoe 24 is pushed with a predetermined pressure via the oil hydraulic presses 14. In the calender treatment step, a raw paper is treated until the raw paper has a predetermined density while moisture and the like contained in a web 28 being received into the press flutes.

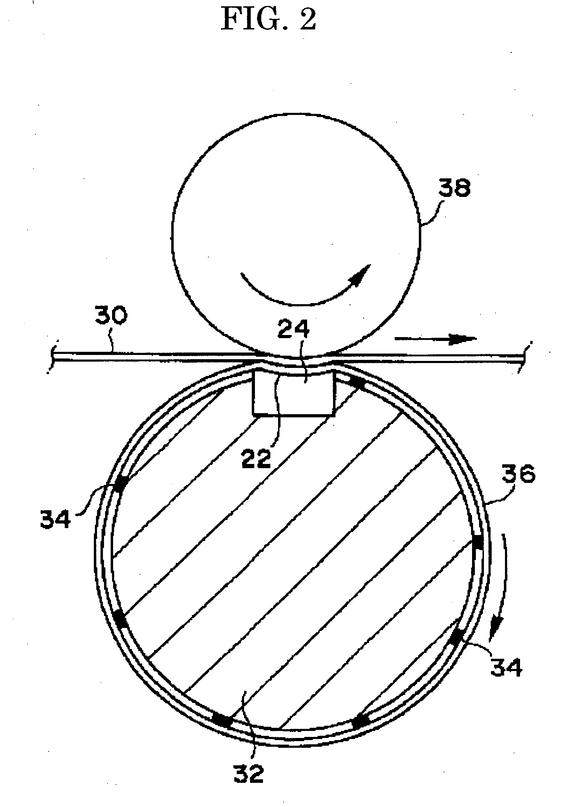

FIG. 2 is a schematic illustration showing one example of another shoe calender according to the present invention. In FIG. 2, same reference numerals are assigned to components which virtually have the same function in FIG. 1.

In FIG. 2, a reference numeral 32 represents a component in which a cylindrical fixed member, as in the case of the shoe calender in FIG. 1, is provided with oil hydraulic presses as a pressurizing unit and a lubrication system for circulating a lubricant and the like. On the circumference of the component, guide members 34 are provided at a specific interval, a sleeve 36 is rotatably provided over the outer circumference of the guide members 34.

In the shoe roller, when a clearance is provided between the sleeve 36 and the cylindrical fixed member placed in the component 32, frictional heat generated when the raw paper is passing over the nip portion is easily emanated, and thus high-speed operation of the shoe calender can be achieved and the lifetime of the sleeve can be prolonged. Further, a cooled lubricant is supplied into the clearance provided between the cylindrical fixed member and the sleeve, the heat emanating effect can be further accelerated.

- Polymer coating layer forming step -

The polymer coating layer forming step is a step in which a polymer coating layer is formed on both surface of a raw paper.

For a polymer used in the polymer coating layer, as described above, a polyolefin resin is preferably used and it is preferable that the polymer coating layer is formed by a melting extrusion laminating method.

According to the method for producing an image-recording material support of the present invention, the image-recording material support of the present invention having high surface smoothness and excellent gloss can be efficiently produced at low costs.

(Image Recording Material)

The image-recording material of the present invention has the image-recording material support of the present invention and at least an image-recording layer on the support and further has other layers in accordance with necessity.

Here, the image-recording material support is as described above.

The image-recording material differs depending on the use and the type of the image-recording material, and examples thereof include electrophotographic image-receiving materials, heat-sensitive color-developing recording materials, sublimation transfer image-receiving materials, silver halide photographic recording materials and inkjet recording materials. Hereinafter, each of the various image-recording materials will be explained.

< Electrophotographic image-receiving material >

The electrophotographic image-receiving material has the image-recording material support of the present invention and at least one layer of toner image-receiving layer that is provided as an image-recording layer on at least one surface of the support and further has other layers suitably selected in accordance with necessity such as a surface protective layer, a back layer, an intermediate layer, an undercoat layer, a cushion layer, a charge control (preventing) layer, a reflective layer, a tint adjusting layer, a storage stability improving layer, an anti-stick layer, an anti-curl layer and a smoothing layer. Each of these layers may be formed in a single-layer structure or in a multi-layered structure with two or more layers.

[Toner Image-Receiving Layer]

The toner image-receiving layer is a toner image-receiving layer that accepts color toners and black toner and forms an image. The toner image-receiving layer accepts toners used to form an image on a developing drum by a static electrical charge, pressure and the like or by means of an intermediate transfer member in an image transferring step and has a function to fix the toner by heat, pressure and the like in a fixing step.

For the toner image-receiving layer, a toner image-receiving layer having low transparency, i.e., a light transmittance of 78% or less is preferable from the perspective that the electrophotographic image-receiving material of the present invention is made to have a texture close to photograph. The light transmittance is more preferably 73% or less and 72% or less is still more preferable.

The light transmittance of the toner image-receiving layer can be measured by the following method. Separately, on a polyethylene terephthalate film having a thickness of 100 $\mu$m, a coating layer having the same thickness as that of the polyethylene terephthalate film is formed, and the light transmittance of the coating layer can be measured by using a direct reading haze mater (HGM-2DP, manufactured by Suga Tester Co., Ltd.).

The toner image-receiving layer contains at least a thermoplastic resin and various types of additives to be added for improving thermodynamic properties of the toner image-receiving layer such as releasing agents, plasticizers, colorants, fillers, crosslinkers, charge control agents, emulsifiers and dispersing agents.

- Thermoplastic Resin -

The thermoplastic resin is not particularly limited and may be suitably selected in accordance with the intended use. Examples thereof include (1) polyolefine resins, (2) polystyrene resins, (3) acrylic resins, (4) polyvinyl acetates or derivatives thereof, (5) polyamide resins, (6) polyester resins, (7) polycarbonate resins, (8) polyether resins (or acetal resins) and (9) other resins. Each of these resins may be used alone or in combination with two or more. Of these, styrene resins, acrylic resins and polyester resins, each of which has a large cohesive energy particularly in terms of being embedded into toner, are preferably used.

Examples of (1) the polyolefine resins include polyolefine resins such as polyethylene and polypropylene and copolymer resins of olefin such as ethylene and propylene and other vinyl monomers. For the copolymer resins of olefin and other vinyl monomers, for example, ethylene-vinyl acetate copolymers and ionomer resins which are copolymers of olefin with acrylic acid or methacrylic acid are exemplified. For the derivatives of polyolefin resins, for example, chlorinated polyethylenes and chlorosulfonated polyethylenes are exemplified.

Examples of (2) the polystyrene resins include polystyrene resins, styrene-isobutylene copolymers, acrylonitrile-styrene copolymers (AS resins), acrylonitrile-butadiene-styrene copolymers (ABS resins) and polystyrene-maleic anhydride resins.

Examples of (3) the acrylic resins include polyacrylic acids or esters thereof, polymethacrylic acids or esters thereof, polyacrylonitriles and polyacrylamides.

For the esters of polyacrylic acids, homopolymers and multi-component copolymers of esters of acrylic acids are exemplified. For the esters of acrylic acids, for example, methyl acrylates, ethyl acrylates, n-butyl acrylates, isobutyl acrylates, dodecyl acrylates, n-octyl acrylates, 2-ethylhexyl acrylates, 2-chloroethyl acrylates, phenyl acrylates and $\alpha$-chloromethyl acrylates are exemplified.

For the esters of polymethacrylic acids, for example, homopolymers and multi-component copolymers of esters of methacrylic acids are exemplified. For the esters of methacrylic acids, for example, homopolymers and multi-component copolymers of esters of methacrylic acids are exemplified. For the esters of the esters of methacrylic acids, for example, methyl methacrylates, ethyl methacrylates and butyl methacrylates are exemplified.

Examples of (4) the polyvinyl acetates or derivatives thereof include polyvinyl acetates, polyvinyl alcohols that can be obtained by saponifying polyvinyl acetate and polyvinyl acetal resins that can be obtained by reacting polyvinyl alcohol with aldehyde (for example, formaldehyde, acetaldehyde, butylaldehyde, etc.).

The polyamide resins (5) are polycondensates of diamine and dibasic acid, and examples thereof include 6-nylon and 6,6-nylon.

The polyester resins (6) are produced by polycondensation between an acid component and an alcohol component. The acid component is not particularly limited and may be suitably selected in accordance with the intended use. Examples thereof include maleic acids, fumaric acids, citraconic acids, itaconic acids, glutaconic acids, phthalic acids, terephthalic acids, isophthalic acids, succinic acids, adipic acids, sebacic acids, azelaic acids, malonic acids, n-dodecenylsuccinic acids, isododecenylsuccinic acids, n-dodecylsuccinic acids, isododecylsuccinic acids, n-octenylsuccinic acids, isooctenylsuccinic acids, isooctylsuccinic acids, trimellitic acids, pyromellitic acids, acid anhydrides thereof or lower alkyl esters thereof.

The alcohol component is not particularly limited and may be suitably selected in accordance with the intended use. For example, divalent alcohols are preferable. As aliphatic diol, for example, ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, 1,4-cyclohexanedimethanol, dipropylene glycol, polyethylene glycol, polypropylene glycol and polytetramethylene glycol are exemplified. Further, as alkylene oxide adducts of bisphenol A, for example, polyoxypropylene (2.2)-2,2-bis(4-hydroxyphenyl) propane, polyoxypropylene (3.3)-2,2-bis(4-hydroxyphenyl) propane, polyoxyethylene (2.0)-2,2-bis(4-hydroxyphenyl) propane, polyoxypropylene (2.0)-polyoxyethylene (2.0)-2,2-bis(4-hydroxyphenyl) propane, polyoxypropylene (6)-2,2-bis(4-hydroxyphenyl) propane are exemplified.

For the (7) polycarbonate resins, polycarbonate esters that can be obtained from bisphenol A and phosgene are common.

Examples of (8) the polyether resins (or acetal resins) include polyether resins such as polyethylene oxides and polypropylene oxides; and as ring-opening polymers, acetal resins such as polyoxymethylene.

Examples of (9) the other resins include polyaddition polyurethane resins.

For the thermoplastic resin, a thermoplastic resin that can satisfy the physical properties of the toner image-receiving layer to be explained below, in a state of forming the toner image-receiving layer is preferable, a thermoplastic resin that can satisfy the physical properties of the toner image-receiving layer to be explained below even with use of a resin alone is more preferable, and it is also preferable to use two or more resins each of which has different physical properties in the physical properties of the toner image-receiving layer to be explained below.

For the thermoplastic resin, a thermoplastic resin having a larger molecular weight than that of the thermoplastic resin used in the toner is preferable. However, the relation of molecular weight is not necessarily preferred depending on the relation of thermodynamic properties of a thermoplastic resin used in the toner and thermodynamic properties of a thermoplastic resin contained in the toner image-receiving layer. For example, when a thermoplastic resin contained in the toner image-receiving layer has a higher softening point than that of a thermoplastic resin used in the toner, it may be preferable that the molecular weightes of these thermoplastic resins are equal or the thermoplastic resin contained in the toner image-receiving layer has a smaller molecular weight than that of the thermoplastic resin used in the toner.

For the thermoplastic resin in the toner image-receiving layer, it is also preferable to use a mixture of resins each of which has the same composition but differs in average molecular weight each other. For the relation of the molecular weight of a thermoplastic resin contained in the toner image-receiving layer with the molecular weight of a thermoplastic resin used in the toner, the relation disclosed in Japanese Patent Application Laid-Open (JP-A) No. 8-334915 is preferable.

It is preferable that the molecular weight distribution of a thermoplastic resin contained in the toner image-receiving layer is wider than the molecular weight distribution of a thermoplastic resin used in the toner.

For the thermoplastic resin contained in the toner image-receiving layer, it is preferable to use a thermoplastic resin that can satisfy the physical properties disclosed in Japanese Patent Application Laid-Open (JP-A) Nos. 5-127413, 8-194394, 8-334915, 8-334916, 9-171265 and 10-221877.

For the thermoplastic resin used for the toner image-receiving layer, a water-based resin is preferably used for the following reasons. (i) Organic solvents are not eluted from water-based resins in a coating and drying step and they are excellent in environmental applicability and handleability. (ii) Most of releasing agents such as waxes are hardly dissolved in solvents at room temperature and a releasing agent is often dispersed in a solvent (water or organic solvent) before being used. Water-dispersed resins are stable and excellent in production process applicability. Further, in water-based resins, wax components easily bleed on the surface in the course of coating and drying and effects of a releasing agent (antioffset property, adhesion resistance, etc.) are easily obtained.

The water-based resin is not particularly limited as to the composition, bond-structure, molecular structure, molecular weight, molecular weight distribution and form as long as it is any one of a water-dispersible polymer and a water-soluble polymer, and may be suitably selected in accordance with the intended use. Examples of water solubilizing groups of the polymers include sulfonate groups, hydroxy groups, carboxyl groups, amino groups, amide groups and ether groups.

For the water-dispersible polymer, for example, it is possible to suitably select two or more in combination from resins in which the thermoplastic resins (1) to (9) are dispersed in water, emulsions, copolymers thereof, mixtures thereof and cation-modified polymers.

For the water-dispersible polymer, a suitably synthesized one may be used or a commercially available one may be used. Example of the commercially available water-dispersible polymers include as polyester-based water-dispersible polymers, BYRONAL series manufactured by TOYOBO CO., LTD., PESRESIN A series manufactured by TAKAMATSU OIL & FAT CO., LTD., TAFTON UE series manufactured by KAO CORPORATION, POLYESTER WR series manufactured by Nippon Synthetic Chemical Industry Co., Ltd. and ELIEL series manufactured by UNITIKA Ltd.; and as acryl-based water-dispersible polymers, HIROS XE, KE, PE series manufactured by SEIKO PMC CORPORATION and JULIMER ET series manufactured by Nihon Junyaku Co., Ltd.

The water-dispersible emulsion is not particularly limited and may be suitably selected in accordance with the intended use. Examples thereof include water-dispersible polyurethane emulsions, water-dispersible polyester emulsions, chloroprene emulsions, styrene-butadiene emulsions, nitrile-butadiene emulsions, butadiene emulsions, vinyl chloride emulsions, vinylpyridine-styrene-butadiene emulsions, polybutene emulsions, polyethylene emulsions, vinyl acetate emulsions, ethylene-vinyl acetate emulsions, vinylidene chloride emulsions, ethylene-vinyl acetate emulsions, vinylidene chloride emulsions and methylmethacrylate-butadiene emulsions. Of these, water-dispersible polyester emulsions are particularly preferable.

The water-dispersible polyester emulsion is preferably a self-dispersible water-based polyester emulsion. Among self-dispersible water-based polyester emulsions, a carboxyl group-containing self-dispersible water-based polyester resin emulsion is particularly preferable. Here, the self-dispersible water-based polyester emulsion means a water-based emulsion containing a polyester resin that is self-dispersible in aqueous solvents without using emulsifiers and the like. The carboxyl group-containing self-dispersible water-based polyester resin emulsion means a water-based emulsion containing a carboxyl group as a hydrophilic group and containing a polyester resin that is self-dispersible in aqueous solvents.

For the self-dispersible type water-dispersible polyester emulsion, the one satisfying the following (1) to (4) is preferable. Since such a polyester emulsion is a self-dispersible polyester emulsion using no surfactant, is has low moisture-absorption property even when used under high humidity atmosphere, causes less decrease in softening point by moisture and can prevent occurrence of offset phenomenon at the time of fixing an image as well as occurrence of inter-sheet troubles when stored. The self-dispersible type water-dispersible polyester emulsion is also excellent in environmental applicability and handleability because it is water-based. Further, because a polyester resin, which is likely to take a high cohesion energy molecular structure, is used, it is in a molten state with low elasticity (low viscosity) in a fixing step of electrophotography, while keeping a sufficient hardness in storage environments, and the toner is embedded in the toner image-receiving layer, thereby allowing for achieving sufficiently high-quality images.

(1) The number average molecular weight (Mn) is preferably 5,000 to 10,000, and more preferably 5,000 to 7,000.
(2) The molecular weight distribution (weight average molecular weight/number average molecular mass) is preferably 4 or less, and Mw/Mn is more preferably 3 or less (Mw/Mn ≤ 3).
(3) The glass transition temperature (Tg) is preferably 40°C to 100°, and more preferably 50°C to 80°C.
(4) The volume average particle diameter is preferably 20 nm to 200 nm, and more preferably 40 nm to 150 nm.

The content of the water-dispersible emulsion in the toner image-receiving layer is preferably 10% by mass to 90% by mass, and more preferably 10% by mass to 70% by mass.

The water-soluble polymer is not particularly limited as long as the weight average molecular weight (Mw) is 400,000 or less, and may be suitably selected in accordance with the intended use. A suitably synthesized water-soluble polymer may be used or a commercially available product may be used. Examples thereof include polyvinyl alcohols, carboxy-modified polyvinyl alcohols, carboxy methyl celluloses, hydroxy ethyl celluloses, cellulose sulfates, polyethylene oxides, gelatins, cationized starches, caseins, sodium polyacrylates, sodium of styrene-maleic acid anhydride copolymer and sodium polystyrene sulfonates. Of these, polyethylene oxides are preferable.

Examples of the commercially available products of the water-soluble polymers include, as water-soluble polyester, various PLUS COAT series manufactured by Gao Chemical Industries, FINETEX ES series manufactured by Dainippon Ink and Chemicals, Inc.; and as water-soluble acryls, JULIMER AT series manufactured by Nihon Junyaku Co., Ltd., FINETEX 6161 and K-96 manufactured by Dainippon Ink and Chemicals, Inc., and HIROS NL-1189 and BH-997L manufactured by SEIKO PMC CORPORATION.

Further, for the water-soluble polymer, those described in Research Disclosure No. 17,435 at page 26, Research Disclosure No. 18,716 at page 651, Research Disclosure No. 307,105 pp. 837 to 874 and in Japanese Patent Application Laid-Open (JP-A) No. 64-13546.

The content of the water-soluble polymer in the toner image-receiving layer is not particularly limited and may be suitably adjusted in accordance with the intended use. It is preferably 0.5g/m$^2$ to 2g/m$^2$.

The thermoplastic resin can be used in combination with other polymer materials, however, in this case, generally, the thermoplastic resin is used such that the content thereof is greater than that of the other polymer materials.

The content of the thermoplastic resin used for the toner image-receiving layer in the toner image-receiving layer is preferably 10% by mass or more, more preferably 30% by mass or more, still more preferably 50% by mass or more, and particularly preferably 50% by mass to 90% by mass.

- Releasing Agent -

The releasing agent is blended in the toner image-receiving layer in order to prevent offset of the toner image-receiving layer. Various types of releasing agents can be used and may be suitably selected in accordance with the intended use, provided that it can be heated and melted at a fixing temperature, precipitated and unevenly distributed on the surface of the toner image-receiving layer and can form a layer of releasing agent material on the surface of the toner image-receiving layer by being cooled and solidified

The releasing agent is at least one element selected from silicone compounds, fluorine compounds, waxes, and matting agents.

The releasing agent may be a compound described in "Properties and Applications of Wax (Revised)", (Kaitei - Wakkusu no seishitsu to ouyou) by Saiwai Publishing, or in the Silicone Handbook published by THE NIKKAN KOGYO SHIMBUN. It is also possible to suitably use silicone compounds, fluorine compounds, waxes used in the toners written in Japanese Patent Application Publication (JP-B) Nos. 59-38581 and 04-32380, Japanese Patent (JP-B) No. 2838498, JP-B No. 2949558, Japanese Patent Application Laid-Open (JP-A) Nos. 50-117433, 52-52640, 57-148755, 61-62056, 61-62057, 61-118760, 02-42451, 03-41465, 04-212175, 04-214570, 04-263267, 05-34966, 05-119514, 06-59502, 06-161150, 06-175396, 06-219040, 06-230600, 06-295093, 07-36210, 07-43940, 07-56387, 07-56390, 07-64335, 07-19968, 07-223362, 07-287413, 08-184992, 08-227180, 08-248671, 08-248799, 08-248801, 08-278663, 09-152739, 09-160278, 09-185181, 09-319139, 09-319143, 10-20549, 10-48889, 10-198069, 10-207116, 11-2917, 11-44969, 11-65156, 11-73049, and 11-194542. These compounds can also be used in combination of two or more.

Examples of the silicone compounds include silicone oils, silicone rubbers, silicone fine-particles, silicone-modified resins and reactive silicone compounds.

Examples of such silicone oils include unmodified silicone oils, amino-modified silicone oils, carboxy-modified silicone oils, carbinol-modified silicone oils, vinyl-modified silicone oils, epoxy-modified silicone oils, polyether-modified silicone oils, silanol-modified silicone oils, methacrylic-modified silicone oils, mercapto-modified silicone oils, alcohol-modified silicone oils, alkyl-modified silicone oils and fluorine-modified silicone oils.

Examples of the silicone-modified resins include olefin resins, polyester resins, vinyl resins, polyamide resins, cellulose resins, phenoxy resins, vinyl chloride-vinyl acetate resins, urethane resins, acrylic resins, styrene-acrylic resins, or resins prepared by modifying these copolymer resins with silicone.

The fluorine compound is not particularly limited and may be suitably selected in accordance with the intended use. Examples of the fluorine compounds include fluorine oils, fluoro rubbers, fluorine-modified resins, fluorine sulfonic acid compounds, fluorosulfonic acids, fluorine acid compounds or salts thereof, and inorganic fluorides.

The above waxes are broadly classified into two, i.e., natural waxes and synthetic waxes.

The natural wax is preferably at least one selected from vegetable waxes, animal waxes, mineral waxes, and petroleum waxes, and among these, vegetable waxes is preferable. Of these, vegetable waxes are particularly preferable. As for the natural wax, a water-dispersible wax is particularly preferable from the viewpoint of compatibility and the like when a water-based resin is used as the polymer for the toner image-receiving layer.

The vegetable wax is not particularly limited and may be suitably selected from among those known in the art. The vegetable wax may be a commercially available product or suitably synthesized. Examples of the vegetable wax include carnauba waxes, castor oils, rapeseed oils, soybean oils, Japan tallow, cotton waxes, rice waxes, sugarcane waxes; candellila waxes, Japan waxes, and jojoba oils.

Examples of commercially available product of the carnauba wax include EMUSTAR AR-0413 manufactured by Nippon Seiro Co., Ltd., and CELLOSOL 524 manufactured by Chukyo Yushi Co., Ltd. Examples of commercially available product of the castor oil include purified castor oil manufactured by Itoh Oil Chemicals Co., Ltd.

Of these, carnauba wax having a melting point of 70°C to 95°C is particularly preferable from the perspective of allowing for providing electrophotographic materials which are excellent in antioffset properties, adhesion resistance, paper transporting properties, gloss, are less likely to cause crack and splitting and are capable of forming high-quality image.

The animal wax is not particularly limited and may be suitably selected from among those known in the art. Examples of the animal waxes include bees wax, lanolin, spermaceti, whale oil, and wool wax.

The mineral wax is not particularly limited and may be suitably selected from among those known in the art. The mineral wax may be a commercially available product or suitably synthesized. Examples of the mineral waxes include montan waxes, montan ester waxes, ozokerite, and ceresin.

Of these mineral waxes, montan wax having a melting point of 70°C to 95°C is particularly preferable from the perspective of allowing for providing electrophotographic materials which are excellent in antioffset properties, adhesion resistance, paper transporting properties, gloss, are less likely to cause crack and splitting and are capable of forming high-quality image.

The petroleum wax is not particularly limited and may be suitably selected from among those known in the art. The petroleum wax may be a commercially available product or suitably synthesized. Examples of the petroleum waxes include paraffin waxes, microcrystalline waxes, and petrolatum.

The content of the natural wax in the toner image-receiving layer is preferably 0.1g/m$^2$ to 4 g/m$^2$, and more preferably 0.2 g/m$^2$ to 2 g/m$^2$.

When the content is less than 0.1 g/m$^2$, the antioffset properties and the adhesion resistance may become insufficient. When the content is more than 4 g/m$^2$, the quality of an image may be degraded due to the excessive amount of wax.

The melting point of the natural wax is preferably 70°C to 95°C, and more preferably 75°C to 90°C, from the perspective of antioffset properties and paper transporting properties.

The synthetic waxes are classified into synthetic hydrocarbons, modified waxes, hydrogenated waxes, and other grease synthetic wax. The synthetic wax is preferably a water-dispersible wax, from the perspective of compatibility when an aqueous thermoplastic resin is used as the thermoplastic resin in the toner image-receiving layer.

Examples of the synthetic hydrocarbons include Fischer Tropsch wax, and polyethylene waxes.

Examples of the grease synthetic waxes include acid amide compounds (for example, stearic acid amide, and the like), acid imide compounds (for example, anhydrous phthalic acid imide, and the like).

The modified wax is not particularly limited and may be suitably selected in accordance with the intended use. Examples of the modified wax include amine-modified waxes, acrylic acid-modified waxes, fluorine-modified waxes, olefin-modified waxes, urethane waxes and alcohol waxes.

The hydrogenated wax is not particularly limited and may be suitably selected in accordance with the intended use. Examples of hydrogenated waxes include cured castor oils, castor oil derivatives, stearic acids, lauric acids, myristic acids, palmitic acids, behenic acids, sebacic acids, undecylenic acids, heptyl acids, maleic acids and high grade maleic oils.

The melting point (°C ) of the releasing agent is preferably 70°C to 95°C, and more preferably 75°C to 90°C, from the viewpoint of antioffset properties and paper transporting properties.

The releasing agent according to the present invention which is added to a toner image-receiving layer may also use derivatives, oxides, refined products, or mixtures thereof. These may also have reactive substituent groups.

The content of the releasing agent, based on the mass of the toner image-receiving layer, is preferably 0.1% by mass to 10% by mass, more preferably 0.3% by mass to 8.0% by mass, and still more preferably 0.5% by mass to 5.0% by mass.

The content less than 0.1% by mass may make the antioffset property and adhesion resistance of the image-recording material insufficient, while more than 10% by mass may degrade the quality of image due to the excessively large amount of releasing agent.

- Plasticizer -

The plasticizer is not particularly limited and may be suitably selected from among those known in the art. These plasticizers have the effect of adjusting the fluidity or softening of the toner image-receiving layer by heat or pressure at the time of fixing an image with the toner.

The plasticizer may be selected with reference to "Chemical Handbook", (Kagaku binran) (edited by The Chemical Society of Japan, Maruzen); "Plasticizers - Theory and Application", (kasozai - Sono riron to ouyou) (edited by Koichi Murai, Saiwai Shobo); "The Study of Plasticizers, Part 1", (Kasozai no kenkyu - jou)*;* and "The Study of Plasticizers, Part 2",(kasozai no kenkyu - ge) (edited by Polymer Chemistry Association); "Handbook of Rubber and Plastics Blending Agents", (Binran - Gomu purasuchikku haigou yakuhin) (edited by Rubber Digest Co.), or the like.

As for the plasticizer, there are ones that are disclosed as high organic solvents having a high boiling point and thermal solvents. Examples of the plasticizers include esters as described in Japanese Patent Application Laid-Open (JP-A) Nos. 59-83154, 59-178451, 59-178453, 59-178454, 59-178455, 59-178457, 62-174754, 62-245253, 61-209444, 61-200538, 62-8145, 62-9348, 62-30247, 62-136646, and 02-235694 (such as phthalic esters, phosphate esters, aliphatic acid esters, abiethyne acid esters, adipic acid esters, sebacic acid esters, azelaic acid esters, benzoate esters, butylate esters, epoxy aliphatic acid esters, glycolic acid esters, propionic acid esters, trimellitic acid esters, citrates, sulfonates, carboxylates, succinic acid esters, maleic acid esters, fumaric acid esters, phthalic acid esters, and stearic acid esters); amides (such as aliphatic acid amides and sulfonamides); ethers; alcohols; lactones; and polyethyleneoxy compounds.

The above plasticizers can be mixed into a resin for use.

Further, for the plasticizers, polymers having relatively low molecular weight can be used. In this case, it is preferred that the molecular weight of the plasticizer is lower than the molecular weight of the binder resin to be plasticized. Preferably, the plasticizers have a molecular weight of 15,000 or less, more preferably 5,000 or less. When a polymer plasticizer is used as the plasticizer, the polymer plasticizer is preferably a polymer kindred to the binder resin to be plasticized. For example, when the polyester resin is plasticized, polyesters having low molecular weight are preferably used. Further, oligomers may also be used as plasticizers.

Apart from the compounds mentioned above, there are commercially available products such as ADECASIZER PN-170 and PN-1430 (manufactured by Asahi Denka Co., Ltd.); PARAPLEX-G-25, G-30 and G-40 (manufactured by C.P. HALL Co.); ESTERGUM 8L-JA, ESTER R-95, PENTALIN 4851, FK115, 4820, 830, RUIZOL 28-JA, PICOLASTIC A75, PICOTEX LC and CRISTALEX 3085 (manufactured by Rika Hercules, Inc.).

The plasticizer can be used as arbitrarily to ease up stress and distortion (physical distortions such as elasticity and viscosity, and distortions due to mass balance in molecules, binder main chains or pendant portions) which are caused when toner particles are embedded in the toner image-receiving layer.

The plasticizer may be dispersed in micro in the toner image-receiving layer. The plasticizer may also be phase-separated in micro, in a state of sea-island, in the toner image-receiving layer. The plasticizer may present in the toner image-receiving layer in a state of sufficiently mixed with other components such as binder.

The content of the plasticizer in the toner image-receiving layer is preferably 0.001% by mass to 90% by mass, more preferably 0.1% by mass to 60% by mass, and still more preferably 1% by mass to 40% by mass.

The plasticizer may be used for the purpose of adjusting slidability (improvement of transportability by reducing friction), improving fixing part offset (release of toner or layer to the fixing part), adjusting curl balance, and adjusting charge control (formation of a toner electrostatic image), and the like.

- Colorant -

The colorant is not particularly limited and may be suitably selected in accordance with the intended use. Examples of the colorants include fluorescent whitening agents, white pigments, colored pigments and dyes.

The fluorescent whitening agent is not particularly limited and may be suitably selected from among those known in the art, as long as it has absorption in the near-ultraviolet region and is a compound which emits fluorescence at 400nm to 500nm. Examples of the fluorescent whitening agents include the compounds described in "The Chemistry of Synthetic Dyes" Volume V, Chapter 8 edited by K. VeenRataraman. The fluorescent whitening agent may be a commercially available product or suitably synthesized for use. Specific examples of the fluorescent whitening agents include stilbene compounds, coumarin compounds, biphenyl compounds, benzo-oxazoline compounds, naphthalimide compounds, pyrazoline compounds, and carbostyryl compounds. Examples of commercial products of the fluorescent whitening agents include WHITE FULFAR-PSN, PHR, HCS, PCS and B (respectively manufactured by Sumitomo Chemicals Co., Ltd.), and UVITEX-OB (manufactured by Ciba-Geigy, Co., Ltd.).

The white pigment is not particularly limited and may be suitably selected from among those known in the art in accordance with the intended use. Examples of the white pigments include inorganic pigments such as titanium oxide and calcium carbonate.

The colored pigment is not particularly limited and may be suitably selected from among those known in the art in accordance with the intended use. Examples of the colored pigments include various pigments described in JP-A No. 63-44653, azo pigments, polycyclic pigments, condensed polycyclic pigments, lake pigments and carbon black.

Examples of the azo pigments include azo lakes (such as carmine 6B and red 2B), insoluble azo pigments (such as monoazo yellow, disazo yellow, pyrazolo orange, and Balkan orange), condensed azo pigments (such as chromophthal yellow and chromophthal red).

Examples of the polycyclic pigments include phthalocyanine pigments such as copper phthalocyanine blue and copper phthalocyanine green.

Examples of the condensed polycyclic pigments include dioxazine pigments (such as dioxazine violet), isoindolinone pigments (such as isoindolinone yellow), threne pigments, perylene pigments, perinone pigments and thioindigo pigments.

Examples of the lake pigments include malachite green, Rhodamine B, Rhodamine G and Victoria blue B.

Examples of the inorganic pigments include oxides (titanium dioxide, iron oxide red, and the like), sulfates (settling barium sulfate, and the like), carbonates (settling calcium carbonate, and the like), silicates (hydrous silicate, silicic anhydride, and the like), metal powder (aluminum powder, bronze powder, zinc powder, chrome yellow, iron blue, and the like).

Each of these pigments may be used alone or in combination of two or more.

The dye is not particularly limited and may be suitably selected from among those known in the art in accordance with the intended use. Examples of dyes include anthraquinone compounds and azo compounds. These dyes may be used alone or in combination of two or more.

Examples of water-insoluble dyes include architecture dyes, disperse dyes, oil-soluble dyes, and the like. Examples of the architecture dyes include C.I. Vat violet 1, C.I. Vat violet 2, C.I. Vat violet 9, C.I. Vat violet 13, C.I. Vat violet 21, C.I. Vat blue 1, C.I. Vat blue 3, C.I. Vat blue 4, C.I. Vat blue 6, C.I. Vat blue 14, C.I. Vat blue 20 and C.I. Vat blue 35. Examples of the disperse dyes include C.I. disperse violet 1, C.I. disperse violet 4, C.I. disperse violet 10, C.I. disperse blue 3, C.I. disperse blue 7, C.I. and disperse blue 58. Examples of the oil-soluble dyes include C.I solvent violet 13, C.I. solvent violet 14, C.I. solvent violet 21, C.I. solvent violet 27, C.I. solvent blue 11, C.I. solvent 12, C.I. solvent blue 25 and C.I. solvent blue 55.

Colored couplers used in silver halide photography may also be preferably used.

The content of the colorant in the toner image-receiving layer is preferably $0.1 g/m^2$ to $8 g/m^2$, and more preferably $0.5 g/m^2$ to $5 g/m^2$.

When the content of colorant is less than $0.1 g/m^2$ or less, the light transmittance in the toner image-receiving layer may become high. When more than $8 g/m^2$, the handleability to crack and adhesion resistance may be degraded.

Among the colorants, the amount of the added pigment is, based on the mass of the thermoplastic resin constituting the toner image-receiving layer, preferably 40% by mass or less, more preferably 30% by mass or less, and still more preferably 20% by mass or less.

The filler may be an organic or inorganic filler. Reinforcers for binder resins, bulking agents, and reinforcements known in the art may be used. The filler may be selected, referring to "Handbook of Rubber and Plastic Additives" (edited by Rubber Digest Co.), "Plastics Blending Agents - Basics and Applications" (New Edition) (Taisei Co.), and "The Filler Handbook" (Taisei Co.).

As the filler, various inorganic fillers or inorganic pigments can be used suitably. Examples of the inorganic fillers or inorganic pigments include silica, alumina, titanium dioxide, zinc oxide, zirconium oxide, micaceous iron oxide, white lead, lead oxide, cobalt oxide, strontium chromate, molybdenum pigments, smectite, magnesium oxide, calcium oxide, calcium carbonate, and mullite. Among these fillers, silica and alumina are particularly preferred. These fillers may be used alone or in combination of two or more. It is preferred that the filler has small particle diameter. When the particle diameter is large, the surface of the toner image-receiving layer tends to become rough.

The silica includes spherical silica and indefinite-form silica. The silica may be synthesized by the dry method, wet method or aerogel method. The surface of hydrophobic silica particles may also be treated with trimethylsilyl groups or silicone. For the silica, colloidal silica is preferred. The silica is preferably porous.

The alumina includes anhydrous alumina and hydrated alumina. Examples of crystallized anhydrous aluminas which may be used are α, β, γ, δ, ξ, η, θ, κ, ρ, and χ. Hydrated alumina is preferable to anhydrous alumina. The hydrated alumina may be a monohydrate or trihydrate. Monohydrates include pseudo-boehmite, boehmite, and diaspore. Trihydrates include gibbsite and byerite. The alumina is preferably porous.

The alumina hydrate can be synthesized by the sol-gel method, in which ammonia is added to an aluminum salt solution to precipitate alumina, or by hydrolysis of an alkali aluminate. Anhydrous alumina can be obtained by dehydrating alumina hydrate by the action of heat.

The amount of filler to be added is preferably from 5 parts by mass to 2,000 parts by mass to 100 parts by mass of the dry mass of the binder of the toner image-receiving layer.

A cross-linking agent can be added in order to adjust the storage stability or thermoplastic properties of the toner image-receiving layer. Examples of the cross-linking agents include compounds containing two or more reactive groups in the molecule, such as an epoxy group, an isocyanate group, an aldehyde group, and active halogen group, an active methylene group, an acetylene group and other reactive groups known in the art.

The cross-linking agent may also be a compound having two or more groups capable of forming bonds such as hydrogen bonds, ionic bonds and coordinate bonds.

As the cross-linking agent, it is possible to use the compounds known in the art as coupling agents for resin, curing agents, polymerizing agents, polymerization promoters, coagulants, film-forming agents, and film-forming assistants. Examples of the coupling agents include chlorosilanes, vinylsilanes, epoxysilanes, aminosilanes, alkoxyaluminum chelates and titanate coupling agents. The examples further include other agents known in the art such as those mentioned in Handbook of Rubber and Plastics Additives"(Binran - Gomu purasuchikkusu no haigou yakuhin) edited by Rubber Digest Co.).

Into the toner image-receiving layer according to the present invention, a charge control agent is preferably included to adjust toner transfer and adhesion to the toner image-receiving layer and to prevent charge adhesion of the toner image-receiving layer.

The charge control agent is not particularly limited and may be suitably selected from among various conventional charge control agents known in the art in accordance with the intended use. Examples of the charge control agents include surfactants such as a cationic surfactant, an anionic surfactant, an amphoteric surfactant, and a nonionic surfactant and further include polymer electrolytes and conductive metal oxides. Specific examples of the charge control agents include cationic charge inhibitors such as quaternary ammonium salts, polyamine derivatives, cation-modified polymethylmethacrylate, and cation-modified polystyrene; anionic charge inhibitors such as alkyl phosphates, and anionic polymers; and nonionic charge inhibitors such as aliphatic acid ester, and polyethylene oxide.

When the toner has a negative charge, it is preferred that the charge control agent blended with the toner image-receiving layer is, for example, cationic or nonionic.

Examples of the conductive metal oxides include $ZnO$, $TiO_2$, $SnO_2$, $Al_2O_3$, $In_2O_3$, $SiO_2$, $MgO$, $BaO$, and $MoO_3$. Each of these may be used alone or in combination of two or more. Moreover, the conductive metal oxide may contain (dope) other elements. For instance, $ZnO$ may contain $Al$, $In$, or the like, $TiO_2$ may contain (dope) $Nb$, $Ta$, or the like, and $SnO_2$ may contain $Sb$, $Nb$, halogen elements, or the like.

- Other additives -

The materials used for the toner image-receiving layer of the present invention may also contain various additives to improve image stability when output, or to improve stability of the toner image-receiving layer itself. Examples of the additives include various know antioxidants, age resistors, degradation inhibitors, ozone degradation inhibitors, ultraviolet ray absorbers, metal complexes, light stabilizers, preservatives, and fungicides.

The antioxidant is not particularly limited and may be suitably selected in accordance with the intended use. Examples of the antioxidants include chroman compounds, coumarane compounds, phenol compounds (for example, hindered phenols), hydroquinone derivatives, hindered amine derivatives, and spiroindan compounds. The antioxidants may be found in JP-A No. 61-159644.

Examples of the age resistors include those found in "Handbook of Rubber and Plastics Additives, Second Edition", (Binran - Gomu purasuchikku haigou yakuhin - kaitei dai 2 han), (1993, Rubber Digest Co.,) pp. 76-121.

The ultraviolet ray absorber is not particularly limited and may be suitably selected in accordance with the intended use. Examples of the ultraviolet ray absorbers include benzotriazole compounds (described in the U.S. Patent No. 3533794), 4-thiazolidone compounds (described in the U.S. Patent No. 3352681), benzophenone compounds (described in JP-A No. 46-2784), and ultraviolet ray absorbing polymers (described in JP-A No. 62-260152).

The metal complex is not particularly limited and may be suitably selected in accordance with the intended use. Examples of the metal complexes include those described in U.S. Patent Nos. 4241155, 4245018 and 4254195, and JP-A Nos. 61-88256, 62-174741, 63-199248, 01-75568, and 01-74272.

The ultraviolet ray absorbers and light stabilizers described in "Handbook of Rubber and Plastics Additives, Second Edition"(Binran - Gomu purasuchikku haigou yakuhin - kaitei dai 2 han) (1933, Rubber Digest Co.), pp. 122-137 are preferably used.

Additives for photography known in the art may also be added to the material used for the toner image-receiving layer as described above. Examples of the photographic additives may be found in the Journal of Research Disclosure (hereinafter referred to as RD) No. 17643 (December 1978), RD No. 18716 (November 1979) and RD No. 307105 (November 1989). The relevant sections are shown below.

Table 1

| Additive | RD17643 | RD 18716 | RD307105 |
|---|---|---|---|
| Whitener | p.24 | p.648 right column | p.868 |
| Stabilizer | pp.24-25 | p.649 right column | pp.868-870 |
| Light absorber (Ultraviolet ray absorber) | pp.25-26 | p.649 right column | pp.873 |
| Colorant image stabilizer | p.25 | p.650 right column | p.872 |
| Film hardener | p.26 | p.651 left column | p.874-875 |
| Binder | p.26 | p.651 left column | p.873-874 |
| Plasticizer, Lubricant | p.27 | p.650 right column | p.876 |
| Auxiliary application agent (Surfactant) | pp.26-27 | p.650 right column | pp.875-876 |
| Antistatic agent | p.27 | p.650 right column | pp.876-877 |
| Matting agent | - | - | pp.878-879 |

The toner image-receiving layer according to the present invention is formed by applying a coating solution containing thermoplastic resin for the toner imager-receiving layer over the surface of the support by a wire coater and by drying it. The minimum film-forming temperature (MFT) of the thermoplastic resin according to the present invention is preferably the room temperature or higher, from the perspective of pre-print storage, and preferably 100°C or lower, from the perspective of fixing toner particles.

The toner image-receiving layer according to the present invention preferably has an application mass after drying in a range from 1g/m$^2$ to 20 g/m$^2$, and more preferably 4 g/m$^2$ to 15 g/m$^2$.

Thickness of the toner image-receiving layer is not particularly limited and may be suitably adjusted in accordance with the intended use. For instance, the toner image-receiving layer is preferred to have a thickness of one-half or more of the particle diameter of used toner, and it is more preferred to have a thickness same as that of the toner particle to three times as thick as the used toner particle. Specifically, the thickness is preferably 1 $\mu$m to 50 $\mu$m, more preferably from 1 $\mu$m to 30 $\mu$m, still more preferably 2 $\mu$m to 20 $\mu$m, and particularly preferably 5 $\mu$m to 15 $\mu$m.

- Physical properties of toner image-receiving layer -

The 180° separation strength of the toner image-receiving layer at the temperature for fixing with a fixing member is preferably 0.1N/25mm or less, and more preferably 0.041N/25mm or less. The 180° separation strength can be measured based on the method described in JIS K 6887 using the surface material of the fixing member.

It is preferred that the toner image-receiving layer has a high degree of whiteness. The whiteness is measured by the method specified in JIS P 8123, and is preferably 85% or more: It is preferred that the spectral reflectance is 85% or more in the wavelength range of 440nm to 640nm, and that the difference between the maximum spectral reflectance and the minimum spectral reflectance in this wavelength range is within 5%. Further, it is more preferred that the spectral reflectance is 85% or more in the wavelength range from 400nm to 700nm, and that the difference between the maximum spectral reflectance and the minimum spectral reflectance in the wavelength is within 5%.

Specifically, for the whiteness, the value of L* is preferably 80 or more, more preferably 85 or more, and still more preferably 90 or more in a CIE 1976 (L*a*b*) color space. The color tint of the white color is preferably as neutral as possible. Regarding the color tint of the whiteness, the value of $(a*)^2 + (b*)^2$ is preferably 50 or less, more preferably 18 or less, and still more preferably 5 or less in the (L*a*b*) space.

It is preferred that the toner image-receiving layer has a high surface gloss after an image being formed. The 45° gloss luster is preferably 60 or more, more preferably 75 or more, and still more preferably 90 or more, over the whole range from white where there is no toner, to black where toner is dense at maximum.

However, the gloss luster is preferably 110 or less. When it is more than 110, the image has a metallic luster, which is undesirable in terms of quality of image.

Gloss luster may be measured based on JIS Z 8741.

It is preferred that the toner image-receiving layer has high surface smoothness after fixing. The arithmetic average roughness (Ra) is preferably 3 $\mu$m or less, more preferably 1 $\mu$m or less, and still more preferably 0.5 $\mu$m or less, over the whole range from white where there is no toner, to black where toner is dense at maximum.

Arithmetic average roughness may be measured based on JIS B 0601, JIS B 0651, and JIS B 0652.

It is preferred that the toner image-receiving layer has one of the following physical properties, more preferred that the toner image-receiving layer has several of the following physical properties, and still more preferred that the toner image-receiving layer has all of the following physical properties.

(1) Tm (melting temperature) of toner image-receiving layer is preferably 30°C or more, and more preferably equal to or less than Tm (melting temperature of toner) + 20°C.
(2) The temperature at which the viscosity of the toner image-receiving layer is 1 x 10$^5$cp is preferably 40°C or higher, and more preferably lower than the corresponding temperature for the toner.
(3) At a fixing temperature of the toner image-receiving layer, the storage elasticity modulus (G') is preferably 1 x 10$^2$Pa to 1 x 10$^5$Pa, the loss elasticity modulus (G") is preferably from 1 x 10$^2$Pa to 1 x 10$^5$Pa.
(4) The loss tangent (G"/G') which is the ratio of the loss elasticity modulus (G") to the storage elasticity modulus (G') at a fixing temperature of the toner image-receiving layer, is preferably from 0.01 to 10.
(5) The storage elasticity modulus (G') at a fixing temperature of the toner image-receiving layer is preferably -50 to +2,500 to the storage elasticity modulus (G') at a fixing temperature of the toner.
(6) The inclination angle on the toner image-receiving layer of a molten toner is preferably 50° or less, and more preferably 40° or less.

The toner image-receiving layer preferably satisfies the physical properties described in Japanese Patent No. 2788358 and JP-A Nos. 07-248637, 08-305067 and 10-239889.

It is preferred that the surface electrical resistance of the toner image-receiving layer is 1 x 10$^6$Ω/cm$^2$ to 1 x 10$^{15}$Ω/cm$^2$ (under conditions of 25°C; 65% RH).

When the surface electrical resistance is less than 1 x 10$^6$Ω/cm$^2$, the amount of toner transferred to the toner image-receiving layer is insufficient, and the density of the toner image obtained may be too low. In contrast, when the surface electrical resistance is more than 1 x $^{15}$Ω/cm$^2$, excessive charge than necessary is produced during transfer.

Therefore, toner is transferred insufficiently, image density is low and static electricity develops, thus causing dust to adhere during handling of the electrophotographic image-receiving material. Furthermore, in this case, misfeed, overfeed, discharge marks, toner transfer dropout and the like may occur during copying.

Herein, the surface electrical resistances are measured in accordance with JIS K 6911. The sample is left with air-conditioning for 8 hours or more at a temperature of 20°C and the humidity of 65% for humidity adjustment. Measurements are made using an R8340 manufactured by Advantest Ltd., under the same environmental conditions after giving an electric current for 1 minute at an applied voltage of 100V

- Other layers -

Other layers of the electrographic image-receiving paper may include, for example, a surface protective layer, a back layer, a contact improving layer, an intermediate layer, an undercoat layer, a cushion layer, a charge control (preventing) layer, a reflective layer, a tint adjusting layer, a storage stability improving layer, an anti-stick layer, an anti-curl layer, a smoothing layer, and the like. These layers may have a single-layer structure or may be formed of tow or more layers.

- Surface protective layer -

The surface protective layer is formed on the surface of the toner image-receiving layer for the purpose of protecting the surface, improving storage stability, improving handleability, giving writing property, improving machine passing property, giving antioffset property, and the like. The surface protective layer may have a single-layer structure or may be formed of two or more layers. As a binder, various thermoplastic resins, thermosetting resins and the like may be used for the surface protective layer. It is preferred that resins of the binder and the toner image-receiving layer are of the same type. In this case, however, the surface protective layer and the toner image-receiving layer do not need to be the same in terms of thermodynamic property, electrostatic property, or the like. Those properties can be optimized separately.

In the surface protective layer, the various additives described above that are usable for the toner image-receiving layer may be blended. Particularly, in the surface protective layer, along with the releasing agent used for the image-recording material of the present invention, other additives such as matting agent may be blended. Various known matting agents are usable.

The top surface layer (for example, the surface protective layer when formed) in the electrophotographic image-receiving material is preferred to have compatibility with the toner in terms of fixability. Specifically, the top surface layer preferably has a contact angle to the melted toner in a range from 0° to 40°.

- Back layer -

The back layer of the electrophotographic image-receiving material is preferably formed on an opposite side of the toner image-receiving layer with respect to the support, for the purpose of giving a back surface output property, improving output image quality of the back surface, improving curl balance, improving machine passing property, and the like.

Color of the back layer is not particularly limited. In the case of both-side output image-receiving paper in which the image is also formed on the back surface, however, the color of the back layer is also preferred to be white. Like the surface, the back layer is preferred to have a whiteness of 85% or more and a spectral reflectance of 85% or more.

Furthermore, for improving both-side output property, the back layer may have a structure same as that of the toner image-receiving layer side. The back layer may use the various additives as explained above. Particularly, additives like matting agent and charge control agent are preferably as the blended additives. The back layer may have a single-layer structure or may be formed of two or more layers.

When a mold-releasing oil is used for a fixing roller and the like for preventing offset during the fixing, the back layer may have oil absorbing property.

The back layer is preferred to have a thickness of 0. 1$\mu$m to 10 $\mu$m.

- Contact improving layer -

In the electrophotographic image-receiving material, the contact improving layer is preferred to be formed for improving the contact (adherence) of the support and the toner image-receiving layer. In the contact improving layer, various additives described above may be blended, particularly the cross-linking agent is preferably blended. Further, the electrophotographic image-receiving material is preferred to have a cushion layer and the like between the contact improving layer and the toner image-receiving layer, for improving receptivity of the toner.

- Intermediate layer -

The intermediate layer may be formed, for example, between the support and the contact improving layer, between the contact improving layer and the cushion layer, between the cushion layer and the toner image-receiving layer, between the toner image-receiving layer and the storage stability improving layer, and the like. In the case of electrophotographic image-receiving material which is formed with a support, a toner image-receiving layer and an intermediate layer, the intermediate layer can be formed, for example, between the support and the toner image-receiving layer.

The thickness of the electrophotographic image-receiving material of the present invention is not particularly limited and may be suitably adjusted in accordance with the intended use. For example, the thickness is preferably 50 $\mu$m to 550 $\mu$m, and more preferably 100 $\mu$m to 350 $\mu$m.

< Toner >

The electrophotographic material according to the present invention is used by allowing the toner image-receiving layer to receive the toner during printing or copying.

The toner contains a binder resin and a colorant, when necessary, further contains a releasing agent, and the like.

- Binder resin of toner -

The binder resin is not particularly limited and may be suitably selected from among those used for toner in accordance with the intended use. Examples of the binder resin include vinyl monopolymer of styrenes such as styrene, and parachlorostyrene; vinyl esters such as vinyl naphthalene, vinyl chloride, vinyl bromide, vinyl fluoride, vinyl acetate, vinyl propionate, vinyl benzoate, and vinyl butyrate; methylene aliphatic carboxylic acid esters such as methyl acrylate, ethyl acrylate, n-butyl acrylate, isobutyl acrylate, dodecyl acrylate, n-octyl acrylate, 2-chloroethyl acrylate, phenyl acrylate, $\alpha$-methyl chloroacrylate, methyl methacrylate, ethyl methacrylate, and butyl acrylate; vinyl nitriles such as acrylonitrile, methacrylonitrile, and acrylamide; vinyl ethers such as vinyl methyl ether, vinyl ethyl ether, and vinyl isobutyl ether; N-vinyl compounds such as N-vinyl pyrrole, N-vinylcarbazole, N-vinyl indole, and N-vinyl pyrrolidone; and vinyl carboxylic acids such as methacrylic acid, acrylic acid, and cinnamic acid. These vinyl monomers may be used either alone, or copolymers thereof may be used. Further, various polyesters may be used, and various waxes may be used in combination with the above mentioned vinyl monomers.

Among these resins, it is preferred to use a resin of the same type as the resin used for the toner image-receiving layer.

- Colorant of toner -

The colorant is not particularly limited and may be suitably selected from among those ordinarily used for toner in accordance with the intended use. Examples of the colorants include various pigments such as carbon black, chrome yellow, Hansa yellow, Benzidine Yellow, threne yellow, quinoline yellow, permanent orange GTR, pyrazoline orange, Balkan orange, watch young red, permanent red, brilliant carmine 3B, brilliant carmine 6B, dippon oil red, pyrazoline red, lithol red, rhodamine B lake, lake red C, Rose Bengale, aniline blue, ultramarine blue, chalco oil blue, methylene blue chloride, phthalocyanine blue, phthalocyanine green, and malachite green oxalate. Other examples include various dyes such as acridine dyes, xanthene dyes, azo dyes, benzoquinone dyes, azine dyes, anthraquinone dyes, thioindigo dyes, dioxazine dyes, thiazine dyes, azomethine dyes, indigo dyes, phthalocyanine dyes, aniline black dyes, polymethine dyes, triphenyl methane dyes, diphenyl methane dyes, thiazole dyes and xanthene dyes.

Each of these colorants may be used alone or in combination with two or more.

The content of the colorant is not particularly limited and may be selected in accordance with the intended use, preferably 2% by mass to 8% by mass. When the content of colorant is less than 2% by mass, tinting strength may be weaken, while more than 8% by mass, transparency may be impaired.

- Releasing agent of toner -

The releasing agent is not particularly limited and may be suitably selected from among those ordinarily used for toner in accordance with the intended use. Polar waxes containing nitrogen such as a compound containing a highly crystalline polyethylene wax having relatively low molecular weight, Fischertropsch wax, amide wax and urethane wax are particularly effective.

For the polyethylene wax, it is effective when the molecular weight is 1,000 or less and is more preferably when the molecular weight is 300 to 1,000.

Since the compounds containing urethane bonds tend to stay in a solid state due to the strength of the coagulation force of the polar groups even if the molecular weight is lower, and since the melting point may be set higher with respect to the molecular weight, such compounds are suitable in general. The preferred molecular weight is 300 to 1,000. The raw material may be selected from various combinations such as diisocyanic acid compound with a mono-alcohol, a monoisocyanic acid with mono-alcohol, dialcohol with a mono-isocyanic acid, tri-alcohol with a monoisocyanic acid, and a triisocyanic acid compound with a mono-alcohol. However, in order to prevent the molecular weight from becoming too large, it is preferable to combine a compound having multiple functional groups with another compound having one functional group, and it is important that the amount of functional groups be equivalent.

Examples of the monoisocyanic acid compounds include dodecyl isocyanate, phenyl isocyanate, and derivatives thereof, naphthyl isocyanate, hexyl isocyanate, benzyl isocyanate, butyl isocyanate and allyl isocyanate.

Examples of the diisocyanic acid compounds include tolylene diisocyanate, 4,4' diphenylmethane, toluene diisocyanate, 1,3-phenylene diisocyanate, hexamethylene diisocyanate, 4-methyl-m-phenylene diisocyanate and isophorone diisocyanate.

Examples of the monoalcohols include methanol, ethanol, propanol, butanol, pentanol, hexanol and heptanol.

Examples of the dialcohols include various glycols such as ethylene glycol, diethylene glycol, triethylene glycol and trimethylene glycol. Examples of the trialcohols include trimethylol propane, triethylol propane, and trimethanol ethane.

Like an ordinary releasing agent, the above noted urethane compounds can be mixed with resin or colorant during kneading, to be used as a mixed-pulverized toner. When used for the toner of the emulsion polymerization melting method, the urethane compound is to be dispersed in water in combination with an ion surfactant or a high molecular electrolyte such as high molecular acid or high molecular base, and then heated to the melting point or more, then subjected to a strong shearing by means of a homogenizer or a pressure discharge type dispersing device for forming fine particles to thereby prepare releasing agent particle-containing dispersing liquid (particle: 1 $\mu$m or less) which can be used in combination with the resin particle-containing dispersing liquid, the colorant-containing dispersing liquid, and the like.

- Other components of toner -

In the toner, other components such as internal additives, charge control agents, inorganic fine particles may be blended. Examples of the internal additives include metals such as ferrite, magnetite, reduced iron, cobalt, nickel and manganese; alloys; and magnetic materials such as compounds including the above metals.

Examples of the charge control agents include those ordinarily used such as quaternary ammonium salts, nigrosine compounds, dyes made of complexes (such as aluminum, iron, and chrome), and triphenyl methane pigments. It is preferable that the charge control agent is unlikely to be soluble in water, from the viewpoint of controlling ion strength which may have an impact on an effect on stability during coagulation or melting and from the viewpoint of reducing waste water pollutant.

Examples of the inorganic particles include all the external additives ordinarily used on the toner surface such as silica, alumina, titania, calcium carbonate, magnesium carbonate and tricalcium phosphate. The above particles are preferably used by dispersing with ion surfactant, high molecular acid or high molecular base.

Surfactants may also be used for emulsion polymerization, seed polymerization, pigment dispersion, resin particle dispersion, releasing agent dispersion, coagulation or stabilization thereof. For example, it is effective to use, in combination with anionic surfactants such as sulfuric acid ester salts, sulfonic acid salts, phosphoric acid esters, and soaps; cationic surfactants such as amine salts, and quaternary ammonium salts; or nonionic surfactants such as polyethylene glycols, alkylphenol ethylene oxide adducts, and polyvalent alcohols. These may generally be dispersed by a rotary shear homogenizer or a ball mill, sand mill, and dyno mill, all of which contain media.

When necessary, an external additive may be added to the toner. Examples of the external additives are inorganic particles or organic particles. Examples of the inorganic particles include $SiO_2$, $TiO_2$, $Al_2O_3$, $CuO$, $ZnO$, $SnO_2$, $Fe_2O_3$, $MgO$, $BaO$, $CaO$, $K_2O$, $Na_2O$, $ZrO_2$, $CaO \cdot SiO_2$, $K_2O \cdot (TiO_2)_n$, $Al_2O_3 \cdot 2SiO_2$, $CaCO_3$, $MgCO_3$, $BaSO_4$ and $MgSO_4$. Examples of the organic particles include fatty acids or derivatives thereof, powders of the above metallic salts and the like, and resin particles such as fluorine resin, polyethylene resin and acrylic resin.

Average particle diameter of the above is preferably from 0.01 $\mu$m to 5 $\mu$m, and more preferably 0.1 $\mu$m to 2 $\mu$m.

There is no particular limitation on the method of producing the toner and it is may be suitably selected in accordance with the intended use, however, it is preferably produced by a method including the steps of (i) forming coagulation particles in a dispersion of resin particles to prepare a coagulation particle dispersion, (ii) adding a fine particle dispersion to the coagulation particle dispersion so that the fine particles adhere to the coagulation particles, thus forming adhesion particles and (iii) heating the adhesion particles to be melted to form toner particles.

- Physical properties of toner -

The toner used in the present invention preferably has a volume average particle diameter of 0.5 $\mu$m to 10 $\mu$m.

The particle diameter lower than the above range may cause a negative effect on toner handling (supplying property, cleaningability, fluidity, and the like), and may decrease particle productivity. While the particle diameter larger than the above range may afford negative effects on image quality and resolution attributable to granularity and transferability of the toner.

It is preferable that the toner used in the present invention satisfies the above mentioned range of volume average particle diameter and has a distribution index of volume average particle diameter (GSDv) being 1.3 or less.

The ratio (GSDv/GSDn) of the distribution index of volume average particle diameter (GSDv) to a distribution index of the number average particle diameter (GSDn) is preferably 0.95 or more.

It is also preferable that the toner according to the present invention satisfies the above range of volume average particle diameter and has an average of configuration indexes (being 1.00 to 1.50), which is expressed by the following expression.

$$\text{Configuration index} = (\pi \times L^2)/(4 \times S)$$

(where L denotes the maximum length of toner particle, and S denotes the projected area of toner particle)

The toner satisfying the above conditions can bring about favorable effects on image quality, particularly on granularity and resolution. With such a toner, dropouts and blurs which may be caused by transfer are unlikely to occur, and handling may be unlikely influenced even when the average particle diameter is not small.

From the perspective of improving image quality and preventing offset during the fixing step, it is preferable that the toner itself has a storage elasticity modulus G' (measured at an angle frequency of 10rad/sec.) of $1 \times 10^2$Pa to $1 \times 10^5$Pa at 150°C.

< Heat-sensitive color-developing recording material >

The heat-sensitive color-developing recording material has, for example, a configuration in which at least a heat-coloring layer as the image-recording layer is formed on an image-recording material support of the present invention. Examples thereof include heat sensitive materials used in thermo-autochrome method (TA method) in which repetition of heating by a heat sensitive head and fixing by ultraviolet ray forms an image.

< Sublimation transfer material >

The sublimation transfer material has, for example, a configuration in which at least an ink layer containing a heat-diffusion pigment (subliming pigment) as the image-recording layer is formed on an image-recording material support of the present invention. The sublimation transfer material is generally used in, for example, a sublimation transfer method in which a heat sensitive head heats an ink layer so as to transfer the heat-diffusion pigment to a sublimation transfer sheet.

< Heat transfer material >

The heat transfer material has, for example, a configuration in which at least a heat-melting ink layer as an image-recording layer is formed on an image-recording material support of the present invention. The heat transfer material is generally used in, for example, a method in which a heat sensitive head heats the heat-melting ink layer so as to melt and transfer the ink to a heat transfer sheet.

< Silver halide photographic material >

The silver halide photographic material has, for example, a configuration in which an image-recording layer which develops at least yellow, magenta and cyan (YMC) is formed on an image-recording material support of the present invention. The material is generally used in, for example, silver halide photography in which an exposed and printed silver halide photographic sheet is soaked in several treatment baths one after another so as to perform color developing, bleaching and fixing, washing with water and drying.

< Inkjet-recording material >

The inkjet-recording material includes, for example, a colorant-receiving layer formed on an image-recording material support of the present invention, where the colorant-receiving layer is capable of receiving a liquid ink such as an aqueous ink (using a pigment or dye as the colorant) and oil ink; a solid ink which is solid at room temperature but is melted and liquefied when used for a print, and the like.

< Printing paper >

It is also preferable that the image-recording material support is used as printing paper. In this case, the support is preferred to have high mechanical strength since the ink is to be applied thereto by means of a printing machine.

When raw paper (base paper) is used as the image-recording material support, it is preferred to include a filling material(s), a softener(s), an internal additive assistant(s) for paper-making, and the like. The filling materials ordinarily used are usable. Examples thereof include inorganic filling materials such as clay, firing clay, diatom earth, talc, kaolin, firing kaolin, delaminated kaolin, heavy calcium carbonate, soft calcium carbonate, magnesium carbonate, barium carbonate, titanium dioxide, zinc oxide, silicon oxide, amorphous silica, aluminum hydroxide, calcium hydroxide, magnesium hydroxide and zinc hydroxide; and organic filling materials such as urea-formalin resin, polystyrene resin, phenol resin and minor hollow particle. Each of these fillings may be used alone or in combination with two or more.

Examples of the internal additive assistants for paper-making include those conventionally used such as various kinds of yield promoters which are nonionic, cationic and anionic; freeness promoters, paper force promoters and internal additive sizing agents. Specific examples thereof include basic aluminum compounds such as aluminum sulfate, aluminum chloride, sodium aluminate, basic aluminum chloride, basic polyaluminum hydroxides; polyvalent metal compounds such as ferrous sulfate and ferric sulfate; water soluble high polymers such as starch, modified starch, polyacrylamide, urea resin, melamine resin, epoxy resin, polyamide resin, polyamine resin, polyamine, polyethylene imine, plant gum, polyvinyl alcohol, latex and polyethylene oxide; various compounds such as hydrophilic cross-linking agent polymer particle dispersion, derivatives thereof, and modified product thereof. The above materials have several functions at the same time as internal additive assistants for the paper-making.

Next, examples of the inner sizing agent include alkyl ketene dimer compounds, alkenyl succinic anhydride compounds, styrene-acrylic compounds, higher fatty acid compounds, petroleum resin sizing agents and rosin sizing agents.

When necessary, the inner sizing agents for paper-making may be suitably added in accordance with the intended use, such as dyes, fluorescent whitening agents, pH regulators, defoaming agents, pitch control agents and slime control agents.

The printing paper is particularly preferable for offset printing paper. The other applications of the printing paper include relief printing paper, gravure printing paper and electrophotographic paper.

Since the image-recording material of the present invention has an image-recording material support having high surface smoothness and excellent gloss and the above-mentioned image recording layer on the support, the image-recording material has excellent gloss and excellent surface smoothness, allows for recording high-quality images and is preferably used as an electrophotographic image-receiving material, a heat-sensitive color-developing recording material, a sublimation transfer image-receiving material, a heat transfer image-receiving material, a silver halide photographic recording material and an inkjet-recording material.

Examples

Hereinafter, the present invention will be further described in detail with reference to specific Examples, however, the present invention is not limited to the disclosed Examples.

(Example 1)

- Preparation of Image-Recording Material Support -

A broad-leaf tree bleached kraft pulp (LBKP) having a fiber length of 0.61 mm and a fiber thickness of 14 $\mu$m before beating treatment was beaten to a Canadian Standard Freeness (C.S.F) of 330ml using a disk refiner to thereby prepare a pulp paper material having a fiber length of 0.60 mm and a fiber thickness of 14 $\mu$m. Accordingly, the reduced fiber length by the beating treatment was 0.01 mm. The moisture retention value of the obtained pulp paper material was 135%.

To the pulp paper material, based on the pulp mass, 1.6% by mass of cationic starch, 0.4% by mass of alkyl ketene dimer (AKD), 0.3% by mass of anionic polyacrylamide, 0.2% by mass of epoxidized fatty acid amide (EFA) and 0.2% by mass of polyamide polyamine epichlorohydrin were added. Note that the alkyl portion of the alkyl ketene dimer is derived from a fatty acid mainly containing a behenic acid and the fatty acid portion of the epoxidized fatty acid amide is derived from a fatty acid mainly containing a behenic acid.

The obtained pulp paper material was treated with a long-net paper-making machine to produce a raw paper having an absolute dry weight of 170 g/m$^2$. As the paper-making conditions, the J/W ratio was set to 1.01. Further, the obtained raw paper had a moisture content measured in accordance with JIS P-8127 of 7.4% (calender pre-treatment moisture content), a TEA in the CD direction measured in accordance with TAPPI T494 of 265J, and a value of TEA/ basis weight of 1.56 $\times$ 10$^3$mJ/g.

Next, the raw paper was subjected to a calender treatment using a long-nip calender with a nip width of 50 mm, as shown in FIG. 1, having a shoe roller placed via a metal roller and a synthetic resin belt, under the conditions that the surface temperature of the metal roller was set to 220°C to make the metal roller surface contact with a surface of the raw paper on which an image recording layer was to be formed (right surface), the surface temperature of the shoe roller was set to 40°C to make the shoe roller surface contact with the opposite surface (back surface) of the raw paper, the nip pressure was set to 120kN/m$^2$ and the calendering speed was set to 710m/min.

As the metal roller, a metal roller having excellence in high-temperature resistance and rust resistance by subjecting the surface thereof to a tungsten carbide-cobalt thermal spray treatment was used.

The moisture content of the obtained raw paper after the calender treatment measured in accordance with JIS P-8127 was 7.2%.

Next, the back surface of the raw paper was subjected to a corona discharge treatment and then coated with a polyethylene composition composed of a low-density polyethylene (LDPE) by melt extrusion at a coating rate of 400m/min using an extruder such that the thickness of the low-density polyethylene composition was 30 $\mu$m, thereby forming a back surface polyolefin resin layer on the back surface of the raw paper.

Subsequently, the surface of the raw paper to be recorded with an image (right surface) was subjected to a corona discharge treatment and then coated with a polyethylene composition composed of a high-density polyethylene (HDPE)/a low-density polyethylene (LDPE) = 2/1 by melt extrusion at a coating rate of 400m/min using an extruder such that the thickness of the polyethylene composition was 25 $\mu$m, thereby forming a surface polyolefin resin layer on the surface of the raw paper.

(Examples 2 to 5 and Comparative Examples 1 to 5)

- Preparation of Image-Recording Material Support -

Raw Papers were obtained in the same manner as in Example 1, except that the J/W ratio used at the time of paper-making, the moisture retention value, the freeness, the reduced fiber length by a beating treatment were respectively changed to the values shown in Table 2. Table 2 shows the TEA, the basis weight and TEA/basis weight of the obtained raw papers. Further, Table 3 shows the pre-calender treatment moisture content of the raw papers. Subsequently, the raw papers were respectively subjected to a calender treatment in the same manner as in Example 1, except that the metal roller surface temperature at the time of calender treatment, the calender nip pressure and the calendering speed were changed to the values shown in Table 3. Table 3 also shows the moisture content of each of the raw papers after calender treatment and the change in moisture content before and after calender treatment. On both surfaces of each of the obtained raw papers, a polymer coating layer was formed in the same manner as in Example 1, thereby preparing image-recording material supports of Examples 2 to 5 and Comparative Examples 1 to 5.

Table 2

|  | Moisture retention value | Freeness (ml) | Reduced fiber length by beating treatment (mm) | J/W ratio | TEA (CD) (J) | Basis weight (g/m$^2$) | TEA (CD) / Basis weight (mJ/g) |
|---|---|---|---|---|---|---|---|
| Ex. 1 | 135 | 330 | 0.01 | 1.01 | 265 | 170 | 1.56 * 10$^3$ |
| Ex. 2 | 118 | 360 | 0.02 | 0.98 | 175 | 168 | 1.04 * 10$^3$ |
| Ex. 3 | 129 | 330 | 0.02 | 0.99 | 232 | 168 | 1.38 * 10$^3$ |
| Ex. 4 | 168 | 280 | 0.03 | 1.02 | 320 | 171 | 1.87 * 10$^3$ |
| Ex. 5 | 183 | 210 | 0.04 | 0.97 | 342 | 170 | 2.01 * 10$^3$ |

(continued)

| | Moisture retention value | Freeness (ml) | Reduced fiber length by beating treatment (mm) | J/W ratio | TEA (CD) (J) | Basis weight (g/m$^2$) | TEA (CD) / Basis weight (mJ/g) |
|---|---|---|---|---|---|---|---|
| Compara. Ex. 1 | 99 | 390 | 0.06 | 1.02 | 155 | 170 | 0.91 * 10$^3$ |
| Compara. Ex. 2 | 160 | 270 | 0.05 | 1.06 | 320 | 169 | 1.89 * 10$^3$ |
| Compara. Ex. 3 | 139 | 340 | 0.03 | 0.93 | 267 | 169 | 1.58 * 10$^3$ |
| Compara. Ex. 4 | 201 | 200 | 0.08 | 1.01 | 333 | 168 | 1.98 * 10$^3$ |
| Compara. Ex. 5 | 213 | 180 | 0.01 | 1.07 | 377 | 169 | 2.23 * 10$^3$ |

Table 3

| | Metal roller surface temperature (°C) | Nip pressure (kN/m$^2$) | Calendering speed (m/min) | Moisture content before calender treatment (%) | Moisture content after calender treatment (%) | Change in moisture content (%) |
|---|---|---|---|---|---|---|
| Ex. 1 | 220 | 120 | 710 | 7.4 | 7.2 | 0.2 |
| Ex.2 | 260 | 305 | 300 | 7.5 | 7.3 | 0.2 |
| Ex. 3 | 270 | 130 | 300 | 7.5 | 7.2 | 0.3 |
| Ex.4 | 250 | 140 | 300 | 7.5 | 7.3 | 0.2 |
| Ex.5 | 320 | 45 | 190 | 7.8 | 7.1 | 0.9 |
| Compara. Ex. 1 | 280 | 140 | 300 | 7.3 | 7.0 | 0.3 |
| Compara. Ex. 2 | 190 | 100 | 300 | 7.2 | 7.1 | 0.1 |
| Compara. Ex. 3 | 360 | 150 | 180 | 8.2 | 7.1 | 1.1 |
| Compara. Ex. 4 | 370 | 130 | 300 | 7.6 | 6.8 | 0.8 |
| Compara. Ex. 5 | 260 | 120 | 300 | 7.4 | 7.1 | 0.3 |

Next, for the respective raw papers that a polymer coating layer had not yet been formed on the both surfaces thereof in the obtained each of the image-recording material supports of Examples 1 to 5 and Comparative Examples 1 to 5, evaluation of wrinkles and paper curl, evaluation of gloss nonuniformity and evaluation of surface smoothness were carried out as follows. Thereafter, for each of the image-recording material supports with the polymer coating layer formed on the both surface thereof, evaluation of small pores, evaluation of gloss texture and evaluation of sheet surface condition were carried out as follows. Table 4 shows the evaluation results.

(Properties of Raw Paper)

< Evaluation of Wrinkles and Paper curl >

The respective raw papers were visually checked to evaluate presence or absence of wrinkles and paper curl, and a raw paper having least wrinkles and paper curl was ranked A, followed by B, C, D and E based on the following criteria.

[Evaluation Criteria]
A    Extremely excellent
B    Excellent
C    Intermediate level
D    Poor
E    Extremely poor

< Evaluation of Gloss Nonuniformity >

The respective raw papers were visually checked to evaluate presence or absence of gloss nonuniformity, and a raw paper having least gloss nonuniformity was ranked A, followed by B, C, D and E based on the following criteria.

[Evaluation Criteria]
A    Extremely excellent
B    Excellent
C    Intermediate level
D    Poor
E    Extremely poor

< Evaluation of Surface Smoothness >

The average surface roughness (SRa) of the center plane of the each of the raw papers on which an image recording layer was to be formed (right surface) was measured after each of the raw papers was cut off in 5 mm to 6 mm, using a surface profilometer, SURFCOM 570A-3DF (Tokyo Seimitsu Co., Ltd.) based on the following measurement and analysis conditions.

- Measurement and Analysis Conditions -

• Scanning direction: MD direction of the sample
• Length of measurement: 50 mm in the paper-making direction (X), and 30 mm in the direction perpendicular to the paper-making direction (Y)
• Pitch of measurement: 0.1 mm in the X direction, and 0.1 mm in the Y direction
• Scanning speed: 30mm/sec
• Band pass filter: 5mm to 6 mm

[Evaluation Criteria]
A    Extremely excellent (having an SRa less than 0.3 $\mu$m)
B    Excellent (having an SRa of 0.3 $\mu$m to less than 0.5 $\mu$m)
C    Intermediate level (having an SRa of 0.5 $\mu$m to less than 1.0 $\mu$m)
D    Poor (having an SRa of 1.0 $\mu$m to less than 2.0 $\mu$m)
E    Extremely poor (having an SRa of 2.0 $\mu$m or more)

(Properties of Support)

< Evaluation of Small Pore >

The polymer coating layers of each of the supports were visually checked, and a support having a smallest number of small pores was ranked A, followed by B, C, D and E based on the following criteria.

A    Extremely excellent (the number of small pores was $20/cm^2$ or less)
B    Excellent (the number of small pores was $21/cm^2$ to $50/cm^2$)
C    Intermediate level (the number of small pores was $51/cm^2$ to $100/cm^2$)
D    Poor (the number of small pores was $101/cm^2$ to $200/cm^2$)
E    Extremely poor (the number of small pores was $201/cm^2$ or more.

< Evaluation of Gloss Texture >

The respective supports were visually checked to evaluate the gloss thereof, and a support having the most excellent gloss was ranked A, followed by B, C, D and E based on the following criteria.

[Evaluation Criteria]
A    Extremely excellent
B    Excellent
C    Intermediate level
D    Poor
E    Extremely poor

< Evaluation of Sheet Surface Condition >

The average surface roughness (SRa) of the supports was measured after each of the supports was cut off in 1 mm to 10 mm, using a surface profilometer, SURFCOM 570A-3DF (Tokyo Seimitsu Co., Ltd.), and the respective supports were evaluated, and a support being in the most excellent condition was ranked A, followed by B, C, D and E based on the following criteria.

[Evaluation Criteria]
A    Extremely excellent (having an SRa of 0.15 $\mu$m or less)
B    Excellent (having an SRa more than 0.15 $\mu$m to 0.20 $\mu$m)
C    Intermediate level (having an SRa more than 0.20 $\mu$m to 0.30 $\mu$m)
D    Poor (having an SRa more than 0.30 $\mu$m to 0.40 $\mu$m)
E    Extremely poor (having an SRa more than 0.40 $\mu$m)

Table 3

| | Properties of Raw Paper | | | Properties of Support (resin coating paper) | | |
|---|---|---|---|---|---|---|
| | Wrinkles & paper curl | Gloss nonuniformity | Surface smoothness | Small pore | Gloss texture | Sheet surface condition |
| Ex. 1 | A | A | B | B | A | B |
| Ex.2 | B | A | A | A | A | B |
| Ex. 3 | A | A | A | A | A | A |
| Ex. 4 | A | A | A | A | A | A |
| Ex. 5 | B | B | A | B | B | B |
| Compara. Ex. 1 | D | A | A | B | B | D |

(continued)

| | Properties of Raw Paper | | | Properties of Support (resin coating paper) | | |
|---|---|---|---|---|---|---|
| | Wrinkles & paper curl | Gloss nonuniformity | Surface smoothness | Small pore | Gloss texture | Sheet surface condition |
| Compara. Ex. 2 | A | A | D | D | B | A |
| Compara. Ex. 3 | E | C | A | A | C | D |
| Compara. Ex. 4 | C | D | A | B | C | C |
| Compara. Ex. 5 | B | D | B | B | D | D |

(Examples 6 to 10 and Comparative Examples 6 to 10)

Electrophotographic image-receiving papers of Examples 6 to 10 and Comparative Examples 6 to 10 were respectively prepared using each of the image-recording material supports of Examples 1 to 5 and Comparative Examples 1 to 5.

- Titanium Dioxide Dispersion -

In a vessel, 40g of titanium dioxide (TIPAQUE A-220 (registered), manufactured by ISHIHARA INDUSTRY CO., LTD.), 2.0g of PVA102 (manufactured by KURARAY Co., Ltd.) and 58.0g of ion exchange water were mixed and dispersed using an NBK-2 manufactured by Nippon Seiki Co., Ltd. to prepare a titanium dioxide dispersion (the content of titanium dioxide pigment was 40% by mass).

- Preparation of Toner Image-Receiving Layer Coating Solution -

In a vessel, 15.5g of the titanium dioxide dispersion, 15.0g of a carnauba wax dispersion (CELLOZOL 524, manufactured by Chukyo Oils and Fats Co.), 100.0g of a polyester resin water dispersion (solid content: 30% by mass, KZA-7049, manufactured by UNITIKA Ltd.), 2.0g of a thickening agent (ALCOX E30, manufactured by Meisei Chemicals Works, Ltd.), 0.5g of an anionic surfactant (AOT) and 80 ml of ion exchange water were mixed and stirred to prepare a toner image-receiving layer coating solution.
The obtained toner image-receiving layer coating solution had a viscosity of 40mPa·s and a surface tension of 34mN/m.

- Preparation of Back Layer Coating Solution -

The following components were mixed and stirred to prepare a back layer coating solution.
Specifically, in a vessel, 100.0g of an acrylic resin water dispersion (solid content: 30% by mass, HIROS XBH-997L, manufactured by SEIKO PMC CORPORATION), 5.0g of a matting agent (TECHPOMER MBX-12, manufactured by SEKISUI PLASTICS CO., LTD.), 10.0g of a releasing agent (HYDRINE D337, manufactured by Chukyo Oils and Fats Co.), 2.0g of a thickening agent (CMC), 0.5g of an anionic surfactant (AOT) and 80ml of ion exchange water were mixed and stirred to prepare a back layer coating solution.
The obtained back layer coating solution had a viscosity of 35mPa-s and a surface tension of 33mN/m.

- Coating of Back Layer and Toner Image-Receiving Layer -

The back layer coating solution was applied over a surface on which a toner image-receiving layer was not to be formed (back surface) in each of the image-recording material supports of Examples 1 to 4 and Comparative Examples 1 to 4 using a bar coater so as to have a dry mass of 9g/m$^2$, thereby forming a back layer.
Further, the toner image-receiving layer coating solution was applied over the right surface of each of the raw papers using a bar coater so as to have a dry mass of 12g/m$^2$, thereby forming a toner image-receiving layer. Note that the content of pigment in the toner image-receiving layer was 5% by mass to the content of the thermoplastic resin.

After the coating treatment, the back layer and the toner image-receiving layer were dried by hot air. The air volume and temperature were adjusted such that both the back layer and the toner image-receiving layer were dried within 2 minutes after the coating treatment. Note that the drying point was specified as a point at which the coating surface temperature was the same temperature as the wet-bulb temperature of the dry airflow.

Next, after dried, the back layer and the toner image-receiving layer were subjected to a calender treatment. Specifically, the back layer and the toner image-receiving layer were calender-treated using a gloss calender under the condition of a nip pressure of 14.7kN/cm$^2$ (15kgf/cm$^2$) while keeping the temperature of the used metal roller at 40°C.

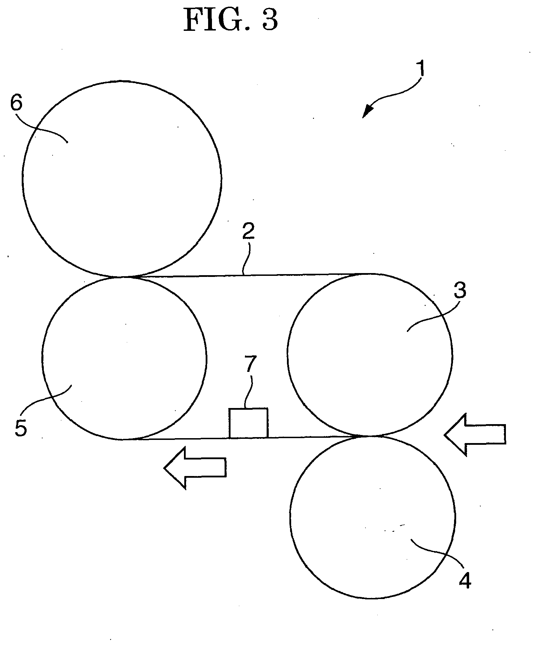

The each of the obtained electrophotographic image-receiving papers was cut in A4 size, and an image was printed thereon using an electrophotographic printer. The used printer was a color laser printer (DocuColor 1250-PF) manufactured by FUJI XEROX Co., Ltd., in which a belt fixing system 1 as shown in FIG. 3 was set as an image fixing unit.

Specifically, in a fixing system 1 as shown in FIG. 3, a fixing belt 2 is spanned over a heating roller 3 and a tension roller 5. On the upper side of the tension roller 5, a cleaning roller 6 is provided via the fixing belt 2, further, on the lower side of the heating roller 3, a pressurizing roller 4 is provided via the fixing belt 2. An electrophotographic image-receiving paper bearing a latent toner image thereon is inserted from the right hand side in FIG. 3 in between the heating roller 3 and the pressurizing roller 4, fixed and then placed on the fixing belt 2 to be transported. In the course of the conveyance, the electrophotographic image-receiving paper was cooled by a cooling device and finally cleaned by a cleaning roller 6.

In the belt fixing system 1, the transporting speed of the fixing belt 2 was 30mm/sec, and the nip pressure between the heating roller 3 and the pressurizing roller 4 was 0.2MPa (2kgf/cm$^2$), the temperature of the heating roller 3 was set to 150°C and the set temperature is equivalent to the fixing temperature. The temperature of the pressurizing roller 4 was set to 120°C.

The image quality and gloss of each of the obtained electrophotographic prints were evaluated as follows. Table 4 shows the evaluation results.

< Image quality >

The respective electrophotographic prints were visually checked to evaluate the image quality, and an electrophotographic print having the most excellent quality of image was ranked A, followed by B, C, D and E based on the following criteria.

[Evaluation Criteria]

|  |  |
|---|---|
| A | Extremely excellent (Usable as a high-quality image recording material) |
| B | Excellent (Usable as a high-quality image recording material) |
| C | Intermediate level (Not usable as a high-quality image recording material) |
| D | Poor (Not usable as a high-quality image recording material) |
| E | Extremely poor (Not usable as a high-quality image recording material) |

< Gloss >

The respective electrophotographic prints were visually checked to evaluate the gloss, and an electrophotographic print having the most excellent gloss was ranked A, followed by B, C, D and E based on the following criteria.

[Evaluation Criteria]

|  |  |
|---|---|
| A | Extremely excellent (Usable as a high-quality image recording material) |
| B | Excellent (Usable as a high-quality image recording material) |
| C | Intermediate level (Not usable as a high-quality image recording material) |
| D | Poor (Not usable as a high-quality image recording material) |
| E | Extremely poor (Not usable as a high-quality image recording material) |

Table 4

|  | Support | Image quality | Gloss |
|---|---|---|---|
| Ex. 6 | Ex. 1 | B | A |
| Ex. 7 | Ex. 2 | A | A |

(continued)

|  | Support | Image quality | Gloss |
|---|---|---|---|
| Ex. 8 | Ex. 3 | A | A |
| Ex. 9 | Ex. 4 | A | A |
| Ex. 10 | Ex. 5 | B | B |
| Compara. Ex. 6 | Compara. Ex. 1 | D | B |
| Compara. Ex. 7 | Compara. Ex. 2 | D | B |
| Compara. Ex. 8 | Compara. Ex. 3 | D | C |
| Compara. Ex. 9 | Compara. Ex. 4 | C | C |
| Compara. Ex. 10 | Compara. Ex. 5 | D | D |

(Examples 11 to 15 and Comparative Examples 11 to 15)

- Photographic printing paper -

Over a surface of each of the image-recording material supports prepared in Examples 1 to 5 and Comparative Examples 1 to 5 on which an image recording layer was to be formed (right surface), 0.1g/m$^2$ of gelatin was applied, and over the surface coated with gelatin, a yellow color photographic silver halide gelatin emulsion layer (10g/m$^2$), a gelatin intermediate layer, a magenta color photographic silver halide gelatin emulsion layer (10g/m$^2$), a gelatin intermediate layer, a cyan color photographic silver halide gelatin emulsion layer (10g/m$^2$) and a gelatin protective layer were applied in this order to form plural layers to thereby prepare photographic printing papers of Examples 11 to 15 and Comparative Examples 11 to 15.
The obtained respective photographic printing papers were exposed and developed to thereby obtain photographic prints.
The surface smoothness (small-scale irregularity (1 mm or less)) and the surface smoothness (large-scale irregularity (5 mm to 6 mm)) of the each of the photographic prints were evaluated by the following method. Table 5 shows the evaluation results.

< Surface Smoothness (small-scale irregularity (1 mm or less)) >

The respective photographic prints were visually checked to evaluate the surface smoothness (small-scale irregularity (1 mm or less)), and a photographic print having the most excellent result in surface smoothness was ranked A, followed by B, C, D and E based on the following criteria.

[Evaluation Criteria]
A    Extremely excellent (Usable as a high-quality image recording material)
B    Excellent (Usable as a high-quality image recording material)
C    Intermediate level (Not usable as a high-quality image recording material)
D    Poor (Not usable as a high-quality image recording material)
E    Extremely poor (Not usable as a high-quality image recording material)

< Surface Smoothness (large-scale irregularity (5 mm to 6 mm))>

The respective photographic prints were visually checked to evaluate the surface smoothness (large-scale irregularity (5 mm to 6 mm)), and a photographic print having the most excellent result in surface smoothness was ranked A, followed by B, C, D and E based on the following criteria.

[Evaluation Criteria]
A    Extremely excellent (Usable as a high-quality image recording material)
B    Excellent (Usable as a high-quality image recording material)
C    Intermediate level (Not usable as a high-quality image recording material)
D    Poor (Not usable as a high-quality image recording material)

(continued)

[Evaluation Criteria]

E  Extremely poor (Not usable as a high-quality image recording material)

Table 5

| | Support | Surface smoothness (small-scale irregularity (1mm or less) | Surface smoothness (large-scale irregularity (5mm to 6mm) |
|---|---|---|---|
| Ex. 11 | Ex. 1 | B | B |
| Ex. 12 | Ex. 2 | A | A |
| Ex. 13 | Ex. 3 | A | A |
| Ex. 14 | Ex. 4 | A | A |
| Ex. 15 | Ex. 5 | A | B |
| Compara. Ex. 11 | Compara. Ex.1 | B | D |
| Compara. Ex. 12 | Compara. Ex. 2 | D | B |
| Compara. Ex. 13 | Compara. Ex. 3 | A | D |
| Compara. Ex. 14 | Compara. Ex. 4 | C | C |
| Compara. Ex. 15 | Compara. Ex. 5 | C | E |

The results shown in Table 3 demonstrated that the image-recording material supports of Examples 1 to 5 allowed for efficiently preventing occurrence of wrinkles, paper curl and gloss nonuniformity and were excellent in surface smoothness because the supports respectively used a raw paper which had a value of tensile energy absorption (TEA) in the cross direction (CD) /basis weight of 1,000 mJ/g to 2,100 mJ/g and was subjected to a soft calender treatment such that the surface of the raw paper on which an image was to be recorded made contact with a roller having a surface temperature of 200°C to 350°C, and the supports formed with the raw paper made it possible to efficiently prevent small pores from being formed and were excellent in gloss and sheet surface condition.

In particular, the image-recording material supports of Examples 3 and 4 caused no wrinkles, paper curl and gloss nonuniformity in the raw papers at all and were extremely excellent in surface smoothness because the calender nip pressure at the time of calender treatment was within a range of $50kN/m^2$ to $300kN/m^2$, the calendering speed was within a range of 200m/min to 700m/min and the change is moisture content of the raw papers before and after calender treatment was 0.8% or less, and the supports formed with the raw paper caused no occurrence of small pores and were extremely excellent in gloss and sheet surface condition.

In contrast to the above-mentioned image-recording material supports, the image-recording material support of Comparative Example 1 prepared by using a raw paper that had a value of TEA/basis weight less than 1,000mJ/g caused lots of wrinkles and paper curls, and the sheet surface condition of the support was degraded. The image-recording material support of Comparative Example 5 prepared by using a raw paper having a value of TEA/basis weight more than 2,100 mJ/g caused nonuniformity of gloss in the raw paper and was poor in gloss and sheet surface condition of the support.

Further, the image-recording material support of Comparative Example 2 using a raw paper prepared by setting the temperature of the metal roller at the time of calender treatment to a temperature less than 200°C was poor in surface smoothness in the raw paper, and the support had a number of small pores on the surface and was poor in gloss and sheet surface condition. The image-recording material supports of Comparative Examples 3 to 4 using a raw paper which was prepared by setting the temperature of the metal roller to a temperature more than 350°C respectively caused lots of wrinkles, paper curls and gloss-nonuniform portions in the raw paper and were poor in gloss and sheet surface condition. The image-recording material support of Comparative Example 3 resulted in a remarkable change in moisture content greater than 0.8% and caused lots of wrinkles and paper curls.

Further, the results shown in Tables 4 and 5 demonstrated that high -quality images having excellent gloss could be recorded with the use of the electrophotographic image-receiving papers of Examples 6 to 10 which were prepared by using the supports of Examples 1 to 5. Furthermore, it was also found that with the use of the photographic printing papers of Examples 11 to 15 which were prepared by using the image-recording material supports of Examples 1 to 5, images having high surface smoothness could be recorded.

Industrial Applicability

Since the image-recording material support of the present invention has high surface smoothness and excellent gloss, it can be suitably used for various image-recording materials on which high-quality images can be recorded, and particularly used for electrophotographic image-receiving material, heat-sensitive color-developing recording material, sublimation transfer image-receiving material, heat transfer image-receiving material, silver halide photographic recording material and inkjet-recording material and the like.

Since the image-recording material of the present invention has the image-recording material support of the present invention, it can be suitably used as an electrophotographic image-receiving material, a heat-sensitive color-developing recording material, a sublimation transfer image-receiving material, a heat transfer image-receiving material, a silver halide photographic recording material and an inkjet-recording material.

**Claims**

1. An image-recording material support, comprising:

   a raw paper, and
   a polymer coating layer on both surfaces of the raw paper,

   wherein the raw paper has a value of tensile energy absorption (TEA) in the CD direction/basis weight of 1,000mJ/g to 2,100mJ/g and is subjected to a soft calender treatment such that a surface of the raw paper on which an image is to be recorded makes contact with a roller having a surface temperature of 200°C to 350°C.

2. The image-recording material support according to claim 1, wherein the calender nip pressure is 50kN/m$^2$ to 300kN/m$^2$, and the calendering speed is 200m/min to 700m/min.

3. The image-recording material support according to any one of claims 1 to 2, wherein a change of moisture content of the raw paper before and after calender treatment is 0.8% or less.

4. The image-recording material support according to any one of claims 1 to 3, wherein the polymer coating layer comprises a polyolefine resin.

5. A method for producing an image-recording material support, comprising:

   calendering a surface of a raw paper on which an image is to be recorded such that the surface of the raw paper makes contact with a roller having a surface temperature of 200°C to 350°C, and
   forming a polymer coating layer by melt laminating a polymer composition on both surfaces of the raw paper to thereby produce an image-recording material support according to any one of claims 1 to 4.

6. An image-recording material, comprising:

   an image-recording material support according to any one of claims 1 to 4,
   and
   at least an image recording layer on the image-recording material support.

7. The image-recording material according to claim 6, being any one selected from electrophotographic image-receiving materials, heat-sensitive color-developing recording materials, sublimation transfer image-receiving materials, heat-transfer image-receiving materials, silver halide photographic recording materials and inkjet-recording materials.

# FIG. 1

# FIG. 2

# FIG. 3

| INTERNATIONAL SEARCH REPORT | International application No. |
|---|---|
| | PCT/JP2006/300496 |

A. CLASSIFICATION OF SUBJECT MATTER
*B32B27/10*(2006.01), *B32B27/32*(2006.01), *D21H25/04*(2006.01), *D21H27/00*
(2006.01), *D21H27/30*(2006.01), *G03C1/775*(2006.01), *G03G7/00*(2006.01)

According to International Patent Classification (IPC) or to both national classification and IPC

B. FIELDS SEARCHED

Minimum documentation searched (classification system followed by classification symbols)
*B32B1/00-43/00*(2006.01), *D21H11/00-27/42*(2006.01), *D21J1/00-7/00*(2006.01),
*G03G7/00*(2006.01), *G03C1/79*(2006.01), *G03G7/00*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| Y | JP 1-059350 A  (Fuji Photo Film Co., Ltd.), 07 March, 1989 (07.03.89), Claims; page 3, upper left column (Family: none) | 1-7 |
| Y | JP 2000-314941 A  (Fuji Photo Film Co., Ltd.), 14 November, 2000 (14.11.00), Claims; Par. Nos. [0032], [0034], [0037] (Family: none) | 1-7 |
| Y | JP 4-110939 A  (Mitsubishi Paper Mills Ltd.), 13 April, 1992 (13.04.92), Page 3, lower left column (Family: none) | 3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 June, 2006 (21.06.06) | 11 July, 2006 (11.07.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/300496 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2001-303488 A  (Fuji Photo Film Co., Ltd.),<br>31 October, 2001 (31.10.01),<br>Claims<br>(Family: none) | 1-7 |
| A | JP 2005-070753 A  (Fuji Photo Film Co., Ltd.),<br>17 March, 2005 (17.03.05),<br>Claims<br>& US 2006/014640 A1 | 1-7 |
| A | JP 2-264939 A  (Fuji Photo Film Co., Ltd.),<br>29 October, 1990 (29.10.90),<br>Claims<br>& US 5200258 A          & EP 0391430 A2 | 1-7 |
| A | JP 2-308242 A  (Fuji Photo Film Co., Ltd.),<br>21 December, 1990 (21.12.90),<br>Claims<br>(Family: none) | 1-7 |
| A | JP 60-126397 A  (Mitsubishi Paper Mills Ltd.),<br>05 July, 1985 (05.07.85),<br>Claims<br>(Family: none) | 1-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2264939 A
- JP 3120539 A
- JP 4110939 A
- JP 6282037 A
- JP 7070973 A
- JP 2003248336 A
- JP 2005009053 A
- JP 8334915 A
- JP 5127413 A
- JP 8194394 A
- JP 8334916 A
- JP 9171265 A
- JP 10221877 A
- JP 6413546 A
- JP 59038581 B
- JP 4032380 B
- JP 2838498 B
- JP 2949558 B
- JP 50117433 A
- JP 52052640 A
- JP 57148755 A
- JP 61062056 A
- JP 61062057 A
- JP 61118760 A
- JP 2042451 A
- JP 3041465 A
- JP 4212175 A
- JP 4214570 A
- JP 4263267 A
- JP 5034966 A
- JP 5119514 A
- JP 6059502 A
- JP 6161150 A
- JP 6175396 A
- JP 6219040 A
- JP 6230600 A
- JP 6295093 A
- JP 7036210 A
- JP 7043940 A
- JP 7056387 A
- JP 7056390 A
- JP 7064335 A
- JP 7019968 A
- JP 7223362 A
- JP 7287413 A
- JP 8184992 A
- JP 8227180 A
- JP 8248671 A
- JP 8248799 A
- JP 8248801 A
- JP 8278663 A
- JP 9152739 A
- JP 9160278 A
- JP 9185181 A
- JP 9319139 A
- JP 9319143 A
- JP 10020549 A
- JP 10048889 A
- JP 10198069 A
- JP 10207116 A
- JP 11002917 A
- JP 11044969 A
- JP 11065156 A
- JP 11073049 A
- JP 11194542 A
- JP 59083154 A
- JP 59178451 A
- JP 59178453 A
- JP 59178454 A
- JP 59178455 A
- JP 59178457 A
- JP 62174754 A
- JP 62245253 A
- JP 61209444 A
- JP 61200538 A
- JP 62008145 A
- JP 62009348 A
- JP 62030247 A
- JP 62136646 A
- JP 2235694 A
- JP 63044653 A
- JP 61159644 A
- US 3533794 A
- US 3352681 A
- JP 46002784 A
- JP 62260152 A
- US 4241155 A
- US 4245018 A
- US 4254195 A
- JP 61088256 A
- JP 62174741 A
- JP 63199248 A
- JP 1075568 A
- JP 1074272 A
- JP 2788358 B
- JP 7248637 A
- JP 8305067 A
- JP 10239889 A

**Non-patent literature cited in the description**

- Paper and Paper Treatment Manual. Shiyaku Time Co., Ltd, 1980, 554-555
- *Research Disclosure No. 17,435,* 26
- *Research Disclosure No. 18,716,* 651
- *Research Disclosure,* vol. 105 (307), 837-874
- **KAGAKU BINRAN.** Chemical Handbook. Chemical Society of Japan
- **KASOZAI - SONO RIRON TO OUYOU.** Plasticizers - Theory and Application. Koichi Murai, Saiwai Shobo
- **KASOZAI NO KENKYU - JOU.** The Study of Plasticizers, Part 1
- **KASOZAI NO KENKYU - GE.** The Study of Plasticizers, Part 2. Polymer Chemistry Association
- **BINRAN - GOMU PURASUCHIKKU HAIGOU YAKUHIN.** Handbook of Rubber and Plastics Blending Agents. Rubber Digest Co,
- Handbook of Rubber and Plastic Additives. Rubber Digest Co,
- Plastics Blending Agents - Basics and Applications. Taisei Co,
- The Filler Handbook. Taisei Co,
- Handbook of Rubber and Plastics Additives, Second Edition. Rubber Digest Co, 1993, 76-121
- Handbook of Rubber and Plastics Additives, Second Edition. Rubber Digest Co, 1933, 122-137